# EUROPÄISCHE PATENTSCHRIFT

(11) **EP 3 781 445 B1**
(45) Veröffentlichungstag und Bekanntmachung des Hinweises auf die Patenterteilung: **07.06.2023**
(21) Anmeldenummer: 19718593.7
(22) Anmeldetag: 05.04.2019
(51) Int. Cl.: B60T 8/32

(54) **MEHRKREISIGES HYDRAULISCH OFFENES BREMSSYSTEM, INSBESONDERE FÜR EIN HOCHAUTOMATISIERTES ODER AUTONOMES FAHRZEUG**
MULTIPLE-CIRCUIT HYDRAULICALLY OPEN BRAKING SYSTEM, IN PARTICULAR FOR A HIGHLY AUTOMATED OR AUTONOMOUS VEHICLE
SYSTÈME DE FREINAGE HYDRAULIQUEMENT OUVERT À PLUSIEURS CIRCUITS, NOTAMMENT POUR VÉHICULE AUTONOME OU FORTEMENT AUTOMATISÉ

(30) Priorität: 20.04.2018 DE 102018206082
(43) Veröffentlichungstag der Anmeldung: 24.02.2021
(73) Patentinhaber: Robert Bosch GmbH, 70442 Stuttgart (DE)
(72) Erfinder: FRIEDRICH, Thomas, 74379 Ingersheim (DE); DROTLEFF, Dirk, 71720 Oberstenfeld-Gronau (DE); KLEEMANN, Ralf, 71726 Benningen Am Neckar (DE); BRENNDOERFER, Daniel, 71638 Ludwigsburg (DE); HIENZ, Bernd, 71640 Ludwigsburg (DE)
(86) Internationale Anmeldenummer: PCT/EP2019/058586
(87) Internationale Veröffentlichungsnummer: WO 2019/201619

(56) Entgegenhaltungen:
- WO-A1-2011/029812
- WO-A1-2012/143313
- WO-A1-2012/150120
- WO-A1-2015/173134
- DE-A1-102016 211 982
- US-A1- 2015 151 726
- US-A1- 2016 009 267

## Beschreibung

Die Erfindung geht aus von einem mehrkreisigen hydraulisch offenen Bremssystem ohne mechanischen und/oder hydraulischen Durchgriff über den Fahrer, insbesondere für ein hochautomatisiertes oder autonomes Fahrzeug, nach der Gattung des unabhängigen Patentanspruchs 1. Gegenstand der vorliegenden Erfindung ist auch ein Betriebsverfahren für ein solches mehrkreisiges hydraulisch offenes Bremssystem ohne mechanischen und/oder hydraulischen Durchgriff über den Fahrer. So ein Bremssystem und Betriebsverfahren ist aus der US 2016/009267 A1 bekannt.

Aus dem Stand der Technik sind Fahrzeuge mit mindestens einer hochautomatisierten oder autonomen Fahrfunktion bekannt, welche zumindest teilweise eine tatsächliche Fahraufgabe übernehmen können. Dadurch können die Fahrzeuge hochautomatisiert oder autonom fahren, indem die Fahrzeuge beispielsweise den Straßenverlauf, andere Verkehrsteilnehmer oder Hindernisse selbständig erkennen und die entsprechenden Ansteuerbefehle im Fahrzeug berechnen sowie diese an die Aktuatoren im Fahrzeug weiterleitet, wodurch der Fahrverlauf des Fahrzeugs korrekt beeinflusst wird. Der Fahrer ist bei einem solchen hochautomatisierten oder autonomen Fahrzeug in der Regel nicht am Fahrgeschehen beteiligt. Trotzdem sind Maßnahmen und Mittel vorgesehen, die es dem Fahrer ermöglichen, jederzeit selbst in das Fahrgeschehen eingreifen zu können.

Zudem sind aus dem Stand der Technik Bremssysteme für Fahrzeuge bekannt, welche für eine Ansteuerung durch einen Fahrzeugführer mit einem hydraulischen Durchgriff ausgelegt sind. Dadurch ist bei Ausfall des Bremssystems gewährleistet, dass der Fahrer durch Betätigen des Bremspedals noch ausreichend Bremskraft auf die Räder des Fahrzeugs bringen kann. Diese Auslegung beeinflusst maßgeblich die Topologie heutiger Bremssysteme. So lässt sich beispielsweise die Größe eines Tandemhauptbremszylinders durch die Aufrechterhaltung einer guten Performance in der Rückfallebene begründen. Zudem können die Bremssysteme als sogenannte gekoppelte Bremssysteme oder Hilfskraftbremssysteme ausgeführt werden. Allerdings sind auch diese Systeme so realisiert, dass als Rückfallebene nach wie vor ein hydraulischer Durchgriff durch den Fahrer gegeben ist. Hilfskraftbremsanalagen sind für hochautomatisierte oder autonome Fahrzeuge ungeeignet, da dort während einer autonomen Fahrfunktion kein Fahrer mehr zum Verstärken da ist und das Bremssystem die Bremsenergie komplett selbstständig aufbauen muss.

Aus der DE 10 2013 227 065 A1 sind ein hydraulisches Bremssystem sowie ein Verfahren zum Betreiben eines solchen Bremssystems bekannt. Das hydraulische Bremssystem umfasst einen Hauptbremszylinder, wenigstens einen Radbremszylinder, einen ersten Bremsdruckerzeuger und einen zweiten Bremsdruckerzeuger. Hierbei ist der Hauptbremszylinder über den zweiten Bremsdruckerzeuger mit dem wenigstens einen Radbremszylinder hydraulisch verbindbar. Hierbei können der erste Bremsdruckerzeuger und der zweite Bremsdruckerzeuger zwischen dem Hauptbremszylinder und dem wenigstens einen Radbremszylinder hydraulisch parallel oder in Reihe geschaltet sein.

Aus der DE 10 2009 001 135 A1 ist ein Verfahren zur Betätigung einer hydraulischen Fahrzeugbremsanlage bekannt. Die Fahrzeugbremsanlage umfasst einen elektromechanischen Bremskraftverstärker und eine Radschlupfregelung. Hierbei wird die Fahrzeugbremsanlage mit dem Bremskraftverstärker in Situationen betätigt, bei denen ein Bremspedal nicht betätigt ist, beispielsweise zur Begrenzung einer Fahrzeuggeschwindigkeit oder einer Abstandsregelung zu einem vorausfahrenden Fahrzeug oder beim Einparken.

Aus den Druckschriften WO 2012/143313 A1, WO 2012/150120 A1, WO 2015/173134 A1 und DE 10 2016 211 982 A1 ist jeweils ein hydraulisch offenes Bremssystem mit einem mechanischen und/oder hydraulischen Durchgriff über den Fahrer bekannt. Die Bremssysteme umfassen jeweils vier Radbremsen, welche jeweils einem Bremskreis mit einem Druckablasspfad zugeordnet sind, und zwei fremdkraftbetätigte Druckerzeuger und einen muskelkraftbetätigten Druckerzeuger, welche zwischen mindestens einem Fluidbehälter und den Radbremsen hydraulisch parallelgeschaltet sind, und eine Modulationseinheit zur hydraulischen Verbindung der Druckerzeuger mit den vier Radbremsen und zur individuellen Bremsdruckmodulation in den vier Radbremsen.

Aus der US 10,166,964 B2 ist ein gattungsgemäßes hydraulisch offenes Bremssystem ohne mechanischen und/oder hydraulischen Durchgriff über den Fahrer bekannt. Das Bremssystem umfasst vier Radbremsen, welche jeweils einem Bremskreis mit einem Druckablasspfad zugeordnet sind, zwei fremdkraftbetätigte Druckerzeuger, welche zwischen mindestens einem Fluidbehälter und den Radbremsen hydraulisch parallelgeschaltet sind, und eine Modulationseinheit zur hydraulischen Verbindung der Druckerzeuger mit den vier Radbremsen und zur individuellen Bremsdruckmodulation in den vier Radbremsen. Hierbei ist ein erster der beiden fremdkraftbetätigten Druckerzeuger einem Hauptsystem zugeordnet, welches eine erste Energieversorgung und eine erste Auswerte- und Steuereinheit umfasst. Ein zweiter der fremdkraftbetätigten Druckerzeuger ist einem Sekundärsystem zugeordnet, welches eine von der ersten Energieversorgung unabhängige zweite Energieversorgung und eine zweite Auswerte- und Steuereinheit umfasst. Die zweite Auswerte- und Steuereinheit steuert den zweiten Druckerzeuger an, wobei Komponenten der Modulationseinheit zur individuellen Bremsdruckmodulation dem Hauptsystem zugeordnet sind, so dass diese Komponenten der Modulationseinheit und der erste Druckerzeuger von der ersten Auswerte- und Steuereinheit angesteuert und von der ersten Energieversorgung mit Energie versorgt werden. Die beiden Druckerzeuger können über vier gemeinsame Absperrventile mit den vier Radbremsen verbunden werden.

### Offenbarung der Erfindung

Das mehrkreisige hydraulisch offene Bremssystem ohne mechanischen und/oder hydraulischen Durchgriff über den Fahrer, insbesondere für ein hochautomatisiertes oder autonomes Fahrzeug, mit den Merkmalen des unabhängigen Patentanspruchs 1 und das korrespondierende Betriebsverfahren für ein solches mehrkreisiges hydraulisch offenes Bremssystem ohne mechanischen und/oder hydraulischen Durchgriff über den Fahrermit den Merkmalen des unabhängigen Patentanspruchs 15 haben den Vorteil, dass eine einfache, robuste und kostengünstige Bremssystemarchitektur ohne mechanischen und/oder hydraulischen Durchgriff über den Fahrer zur Verfügung gestellt wird, welche auch im Fehlerfall durch ein geeignetes Redundanzkonzept eine ausreichende Bremsperformance ermöglicht.

Ausführungsformen der Erfindung weisen weniger Komponenten als bekannte Bremssysteme auf, da weniger Ventile, kein Pedalwegsimulator, kein Mechanismus, um den Fahrerdruck zu erzeugen, zu verstärken und weiterzuleiten erforderlich sind, so dass geringere Bremssystemkosten entstehen. Zudem ergeben sich geringere Systemkosten, da an den Radbremsen nur ein hydraulischer Anschluss vorhanden ist und keine Alternativlösungen mit zwei Anschlüssen im Bremssattel erforderlich sind, die auf unterschiedliche Kolben wirken.

Außerdem ergeben sich geringere Integrationskosten beim Fahrzeughersteller, da die Ausführungsformen der Erfindung aufgrund der elektrischen Ansteuerung ohne mechanischen und/oder hydraulischen Durchgriff über den Fahrer einen einfachen Einbau, insbesondere für Rechts- und Linkslenker, ermöglichen und Einbauraum an der Spritzwand zwischen Motorraum und Fahrzeuginnenraum freigeben. Da keiner der Bremssystemaktuatoren an der Spritzwand montiert sein muss, können sich auch NVH-Vorteile (NVH: Noise, Vibration, Harshness "Geräusch, Vibration, Rauigkeit") ergeben. Aufgrund der kleineren Anzahl von Komponenten ergibt sich zudem ein geringeres Gewicht und Volumen im Vergleich zu bekannten Bremssystemen.

Durch die Aufteilung in ein Hauptsystem und ein Sekundärsystem kann einfach ein modulares Konzept mit zwei Baugruppen umgesetzt werden.

Ausführungsformen der vorliegenden Erfindung stellen ein mehrkreisiges hydraulisch offenes Bremssystem ohne mechanischen und/oder hydraulischen Durchgriff über den Fahrer, insbesondere für ein hochautomatisiertes oder autonomes Fahrzeug, mit mindestens zwei Radbremsen, welche jeweils einem Bremskreis mit einem Druckablasspfad zugeordnet sind, zwei Druckerzeugern, welche zwischen mindestens einem Fluidbehälter und den mindestens zwei Radbremsen hydraulisch parallel geschaltet sind, und einer Modulationseinheit zur hydraulischen Verbindung der Druckerzeuger mit den mindestens zwei Radbremsen und zur individuellen Bremsdruckmodulation in den mindestens zwei Radbremsen zur Verfügung. Hierbei ist ein erster Druckerzeuger einem Hauptsystem zugeordnet, welches eine erste Energieversorgung und eine erste Auswerte- und Steuereinheit umfasst, und über ein erstes Absperrventil mit mindestens einer Radbremse eines ersten Bremskreises und über ein zweites Absperrventil mit mindestens einer Radbremse eines zweiten Bremskreises verbindbar. Ein zweiter Druckerzeuger ist einem Sekundärsystem zugeordnet, welches eine von der ersten Energieversorgung unabhängige zweite Energieversorgung und eine zweite Auswerte- und Steuereinheit umfasst, und über ein drittes Absperrventil mit mindestens einer Radbremse des ersten Bremskreises und über ein viertes Absperrventil mit mindestens einer Radbremse des zweiten Bremskreises verbindbar. Die zweite Auswerte- und Steuereinheit steuert den zweiten Druckerzeuger an, wobei Komponenten der Modulationseinheit zur individuellen Bremsdruckmodulation dem Hauptsystem zugeordnet sind, so dass diese Komponenten der Modulationseinheit und der erste Druckerzeuger von der ersten Auswerte- und Steuereinheit angesteuert und von der ersten Energieversorgung mit Energie versorgt werden. Die Absperrventile werden von der ersten Auswerte- und Steuereinheit und/oder von der zweiten Auswerte- und Steuereinheit so angesteuert, dass bei Aktivierung von einem der beiden Druckerzeuger ein Hydraulikfluid nicht durch den anderen der beiden Druckerzeuger geleitet wird.

Zudem wird ein Betriebsverfahren für ein solches mehrkreisiges hydraulisch offenes Bremssystem ohne mechanischen und/oder hydraulischen Durchgriff über den Fahrer, insbesondere für ein hochautomatisiertes oder autonomes Fahrzeug, vorgeschlagen. Im Normalbetrieb erhöht oder reduziert oder hält das Hauptsystem mittels des ersten Druckerzeugers den Druck in den Bremskreisen und führt mittels der Modulationseinheit die individuelle Bremsdruckmodulation in den mindestens zwei Radbremsen aus. Bei Ausfall des Hauptsystems erhöht oder reduziert oder hält das Sekundärsystem mittels des zweiten Druckerzeugers den Druck in den Bremskreisen und die individuelle Bremsdruckmodulation in den mindestens zwei Radbremsen entfällt.

Unter einem hydraulisch offenen Bremssystem, wird ein Bremssystem verstanden, bei welchem während einer individuellen Bremsdruckmodulation abgelassenes Bremsfluid aus den Radbremsen über einen Druckablasspfad zum Fluidbehälter zurückgeführt werden kann.

Durch die individuelle Bremsdruckmodulation in den einzelnen Radbremsen können in vorteilhafter Weise verschiedene Regelfunktionen, wie beispielsweise eine Blockierschutzregelung ABS, eine Antriebsschlupfregelung ASR, eine Fahrdynamikregelung FDR bzw. ESP zur Längs- und Querstabilisierung des Fahrzeugs umgesetzt werden. Da diese Regelfunktionen an sich bekannt sind wird hier nicht näher auf diese eingegangen.

Unter der Auswerte- und Steuereinheit kann vorliegend ein elektrisches Gerät, wie beispielsweise ein Steuergerät verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Zur Erfassung der Sensorsignale sind Sensoreinheiten vorgesehen, unter welchen vorliegend Baugruppen verstanden werden, welche mindestens ein Sensorelement umfassen, welches eine physikalische Größe bzw. eine Änderung einer physikalischen Größe direkt oder indirekt erfasst und vorzugsweise in ein elektrisches Sensorsignal umwandelt. Dies kann beispielsweise über das Aussenden und/oder das Empfangen von Schallwellen und/oder elektromagnetischen Wellen und/oder über ein Magnetfeld bzw. die Änderung eines Magnetfelds und/oder das Empfangen von Satellitensignalen beispielsweise eines GPS-Signals erfolgen. Eine solche Sensoreinheit kann beispielsweise Beschleunigungssensorelemente, welche beschleunigungsrelevante Informationen des Fahrzeugs erfassen, und/oder Sensorelemente umfassen, welche Gegenstände und/oder Hindernisse und/oder andere crashrelevante Fahrzeugumfelddaten ermitteln und zur Auswertung zur Verfügung stellen. Solche Sensorelemente können beispielsweise auf Video- und/oder Radar- und/oder Lidar und/oder PMD- und/oder Ultraschall-Technologien basieren. Zudem können auch Signale und Informationen einer vorhandenen ABS-Sensorik und die im dafür vorgesehenen Steuergerät abgeleiteten Größen ausgewertet werden. Basierend auf den beschleunigungsrelevanten Informationen und/oder daraus ermittelten Größen können beispielsweise eine Fahrzeugbewegung und eine Fahrzeuglage im dreidimensionalen Raum geschätzt werden und zur Unfallerkennung ausgewertet werden.

Zur Positionsbestimmung des Fahrzeugs können beispielsweise globale Navigationssatellitensysteme GNSS (GNSS: Global Navigation Satellite System) eingesetzt werden. Hierbei wird GNSS als Sammelbegriff für die Verwendung bestehender und künftiger globaler Satellitensysteme wie NAVSTAR GPS (Global Positioning System) der Vereinigten Staaten von Amerika, GLONASS (Global Navigation Satellite System) der Russischen Föderation, Galileo der Europäischen Union, Beidou der Volksrepublik China usw. eingesetzt.

Unter einem hochautomatisierten oder autonomen Fahrzeug, wird ein Fahrzeug verstanden, welches mindestens eine hochautomatisierte oder autonome Fahrfunktion aufweist, welche zumindest teilweise eine tatsächliche Fahraufgabe übernehmen kann. Über diese mindestens eine hochautomatisierte oder autonome Fahrfunktion erkennt das Fahrzeug beispielsweise den Straßenverlauf, andere Verkehrsteilnehmer oder Hindernisse selbständig und berechnet die entsprechenden Ansteuerbefehle, welche an die Aktuatoren im Fahrzeug weiterleitet werden, wodurch der Fahrverlauf des Fahrzeugs korrekt beeinflusst wird. Der Fahrer ist bei einem solchen hochautomatisierten oder autonomen Fahrzeug in der Regel nicht am Fahrgeschehen beteiligt. Trotzdem sind Maßnahmen und Mittel, beispielsweise in Form von elektrischen oder elektronischen Betätigungselementen, vorgesehen, die es dem Fahrer ermöglichen, jederzeit selbst in das Fahrgeschehen eingreifen zu können. Der vom Fahrer mittels der Betätigungselemente erzeugte Bremswunsch wird dann über elektrische Signale an das Hauptsystem und/oder das Sekundärsystem weitergeleitet. Ein mechanischer und/oder hydraulischen Durchgriff durch den Fahrer ist jedoch nicht vorhanden.

Die mindestens eine Fahrfunktion wertet zur Trajektorienplanung von internen Sensoreinheiten erfasste Fahrzeugdaten wie ABS-Eingriffe, Lenkwinkel, Position, Richtung, Geschwindigkeit, Beschleunigung usw. und/oder Fahrzeugumfelddaten aus, welche beispielsweise über Kamera-, Radar-, Lidar- und/oder Ultraschallsensoreinheiten erfasst werden, und steuert die Auswerte- und Steuereinheiten des Hauptsystems und des Sekundärsystems entsprechend an, um einen gewünschten Bremsdruck zu erzeugen und/oder Stabilisierungsvorgänge in Längs- und/oder Querrichtung durch individuelle Bremsdruckmodulation in den Radbremsen zu realisieren.

Durch die in den abhängigen Ansprüchen aufgeführten Maßnahmen und Weiterbildungen sind vorteilhafte Verbesserungen des im unabhängigen Patentanspruch 1 angegebenen mehrkreisigen hydraulisch offenen Bremssystems ohne mechanischen und/oder hydraulischen Durchgriff über den Fahrer, insbesondere für ein hochautomatisiertes oder autonomes Fahrzeug, und des im unabhängigen Patentanspruch 15 angegebenen Betriebsverfahrens für ein solches mehrkreisiges hydraulisch offenes Bremssystem ohne mechanischen und/oder hydraulischen Durchgriff über den Fahrer, insbesondere für ein hochautomatisiertes oder autonomes Fahrzeug, möglich.

Besonders vorteilhaft ist, dass der erste Druckerzeuger einkreisig und der zweite Druckerzeuger zweikreisig ausgeführt werden kann. Alternativ können der erste Druckerzeuger und der zweite Druckerzeuger zweikreisig ausgeführt werden. Als weitere Alternative kann der erste Druckerzeuger zweikreisig, und der zweite Druckerzeuger kann einkreisig ausgeführt werden. Hierbei bedeutet die einkreisige Ausführung eines Druckerzeugers, dass beide Bremskreise von einer Kammer bzw. von einer Pumpe des Druckerzeugers versorgt werden. Hierbei bedeutet die zweikreisige Ausführung eines Druckerzeugers, dass jeweils ein Bremskreis von einer Kammer bzw. von einer Pumpe des Druckerzeugers versorgt wird.

Zudem können beispielsweise das erste Absperrventil und das zweite Absperrventil jeweils als stromlos geschlossene Magnetventile ausgeführt werden, und das dritte Absperrventil und das vierte Absperrventil können als stromlos offene Magnetventile ausgeführt werden, wobei die erste Auswerte- und Steuereinheit die Absperrventile ansteuert. Somit gehören die Absperrventile bei dieser Ausführungsform zum Hauptsystem und werden von der ersten Energieversorgungseinheit mit Energie versorgt. Durch die stromlos geschlossene Ausführung des ersten Absperrventils und des zweiten Absperrventils ist der erste Druckerzeuger hydraulisch von den Radbremsen getrennt. Durch die stromlos offene Ausführung des dritten Absperrventils und des vierten Absperrventils ist der zweite Druckerzeuger hydraulisch mit den Radbremsen verbunden. Daher ist im Normalbetrieb, in welchem der erste Druckerzeuger den Druck für die Radbremsen erzeugt, eine Ansteuerung der Absperrventile erforderlich, um den ersten Druckerzeuger hydraulisch mit den Radbremsen zu verbinden und den zweiten Druckerzeuger hydraulisch von den Radbremsen zu trennen. Zudem sind die Radbremsen über den zweiten Druckerzeuger mit dem mindestens einen Fluidbehälter verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen durch das Sekundärsystem".

Alternativ können das erste Absperrventil und das zweite Absperrventil jeweils als stromlos offene Magnetventile ausgeführt werden, und das dritte Absperrventil und das vierte Absperrventil können als stromlos geschlossene Magnetventile ausgeführt werden, wobei die zweite Auswerte- und Steuereinheit die Absperrventile ansteuert. Somit gehören die Absperrventile bei dieser Ausführungsform zum Sekundärsystem und werden von der zweiten Energieversorgungseinheit mit Energie versorgt. Durch die stromlos offene Ausführung des ersten Absperrventils und des zweiten Absperrventils ist der erste Druckerzeuger hydraulisch mit den Radbremsen verbunden. Durch die stromlos geschlossene Ausführung des dritten Absperrventils und des vierten Absperrventils ist der zweite Druckerzeuger hydraulisch von den Radbremsen getrennt. Daher ist im Normalbetrieb, in welchem der erste Druckerzeuger den Druck für die Radbremsen erzeugt, keine Ansteuerung der Absperrventile erforderlich, um den ersten Druckerzeuger hydraulisch mit den Radbremsen zu verbinden und den zweiten Druckerzeuger hydraulisch von den Radbremsen zu trennen. Zudem sind die Radbremsen über den ersten Druckerzeuger mit dem mindestens einen Fluidbehälter verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen durch das Hauptsystem".

In weiterer vorteilhafter Ausgestaltung des Bremssystems können das Hauptsystem und das Sekundärsystem einen gemeinsamen Fluidbehälter aufweisen. Alternativ kann ein erster Fluidbehälter mit mindestens einer Fluidkammer dem Hauptsystem zugeordnet werden, und ein zweiter Fluidbehälter mit mindestens einer Fluidkammer kann dem Sekundärsystem zugeordnet werden. So können die Fluidbehälter beispielsweise für jeden Kreis der Druckerzeuger eine Fluidkammer aufweisen. Das bedeutet, dass der erste Fluidbehälter bei einem einkreisigen ersten Druckerzeuger eine Fluidkammer und bei einem zweikreisigen ersten Druckerzeuger zwei Fluidkammern umfassen kann, wobei der zweite Fluidbehälter bei einem einkreisigen zweiten Druckerzeuger eine Fluidkammer und bei einem zweikreisigen zweiten Druckerzeuger zwei Fluidkammern umfassen kann.

In weiterer vorteilhafter Ausgestaltung des Bremssystems kann der erste Druckerzeuger als Plungersystem oder als Pumpensystem ausgeführt werden. Aufgrund der offenen Architektur ist der als Plungersystem ausgeführte erste Druckerzeuger in der Lage, Fluid nachzuladen bzw. nachzuschnüffeln. Hierbei verhindern die Absperrventile in vorteilhafter Weise, dass das Plungersystem während des Nachladevorgangs Bremsfluid aus den Radbremsen ansaugt. Des Weiteren kann für das erste Plungersystem in jedem Bremskreis jeweils eine Saugleitung mit Rückschlagventil vorgesehen sein, welche das erste Plungersystem zusätzlich mit dem Fluidbehälter hydraulisch verbinden kann. Dadurch kann der Nachladevorgang insbesondere bei Tieftemperaturen schneller durchgeführt werden. Analog kann der zweite Druckerzeuger als Plungersystem oder als Pumpensystem ausgeführt werden. Hierbei kann ein solches Plungersystem eine Kolben-Zylindereinheit mit mindestens einem Kolben und mindestens einer Kammer und mit einem Antrieb aufweisen, wobei der Antrieb den mindestens einen Kolben gegen die Kraft einer Rückstellfeder zur Druckeinstellung in der mindestens einen Kammer bewegen kann. Das bedeutet, dass ein einkreisiger Druckerzeuger eine Kammer und einen Kolben umfasst. Ein zweikreisiger Druckerzeuger umfasst zwei Kammern und zwei Kolben. Ein solches Pumpensystem kann mindestens eine Pumpe und mindestens einen Antrieb aufweisen, welcher die mindestens eine Pumpe antreiben kann. Das bedeutet, dass ein einkreisiger Druckerzeuger eine Pumpe umfasst. Ein zweikreisiger Druckerzeuger umfasst zwei Pumpen, die jeweils von einem Antrieb oder von einem gemeinsamen Antrieb angetrieben werden können.

Durch die Ausführung des ersten Druckerzeugers als Plungersystem ergibt sich eine gute NVH-Performance im Gesamtsystem und ein einfacheres und/oder genaueres Monitoring und eine verbesserte Regelung. Dies ermöglicht, dass sowohl Lage als auch Volumen- und Druckaufbauinformationen im Hauptsystem in Vergleich zu anderen Konzepten (Pumpensystem) einfacher und insbesondere genauer erfasst werden können. Durch die Ausführung des zweiten Druckerzeugers als Plungersystem ergibt sich sowohl im Normalbetrieb als auch bei Ausfall des Hauptsystems eine sehr gute NVH-Performance. Durch die Ausführung des zweiten Druckerzeugers als Pumpensystem ergeben sich noch geringere Kosten, Bauraum und Gewicht im Vergleich zu anderen Konzepten (Plungersystem).

Die Modulationseinheit kann für jede Radbremse zur individuellen Bremsdruckmodulation jeweils ein Einlassventil und jeweils ein Auslassventil umfassen. Die Einlassventile können beispielsweise als regelbare stromlos offene Magnetventile ausgeführt werden. Die Auslassventile können beispielsweise als elektromagnetische stromlos geschlossene Schaltventile oder als regelbare stromlos geschlossene Magnetventile ausgeführt werden. Durch diese Ausführung der Modulationseinheit ist es in vorteilhafter Weise möglich, Einlassventile und/oder Auslassventile von bereits bekannten ESP-Systemen einzusetzen und über bereits existierenden Skaleneffekt (ESP wird millionenfach gebaut) sehr niedrige Gesamtsystemkosten zu erzielen. Des Weiteren kann eine erste Radbremse und eine zweite Radbremse dem ersten Bremskreis und eine dritte Radbremse und eine vierte Radbremse dem zweiten Bremskreis zugeordnet werden. Hierbei ist sowohl eine X-Aufteilung, d.h. die Radbremse des linken Vorderrads und die Radbremse des rechten Hinterrads sind dem ersten Bremskreis und die Radbremse des rechten Vorderrads und die Radbremse des linken Hinterrads sind dem zweiten Bremskreis zugeordnet, als auch eine II-Aufteilung der Bremskreise möglich, d.h. die Radbremse des linken Vorderrads und die Radbremse des rechten Vorderrads sind dem ersten Bremskreis und die Radbremse des linken Hinterrads und die Radbremse des rechten Hinterrads sind dem zweiten Bremskreis zugeordnet.

In weiterer vorteilhafter Ausgestaltung des Bremssystems kann während einer individuellen Bremsdruckmodulation in der mindestens einen Radbremse aus der mindestens einen Radbremse abgelassenes Bremsfluid über den mindestens einen Druckablasspfad entweder in den ersten Fluidbehälter oder in den zweiten Fluidbehälter zurückgeführt werden. Durch eine solche definierte Rückführung in nur einen Fluidbehälter liegen dort definierte Füllzustände vor. Bei einer Rückführung in beide Fluidbehälter wäre zusätzlich ein Füllstandsausgleich mit zusätzliche Hardware und Überwachung der Füllstände erforderlich, was höhere Kosten verursachen würde.

In weiterer vorteilhafter Ausgestaltung des Bremssystems können der erste Druckerzeuger, der zweite Druckerzeuger und die Modulationseinheit in einem gemeinsamen Hydraulikblock angeordnet werden. Hierbei können auch die Absperrventile in diesem gemeinsamen Hydraulikblock angeordnet werden. Alternativ können der erste Druckerzeuger und die Modulationseinheit in einem ersten Hydraulikblock angeordnet werden, und der zweite Druckerzeuger kann in einem zweiten Hydraulikblock angeordnet werden. Bei dieser Ausführungsform können die Absperrventile je nach Zuordnung auf die beiden Hydraulikblöcke aufgeteilt oder gemeinsam in einem der beiden Hydraulikblöcke angeordnet werden.

In vorteilhafter Ausgestaltung des Betriebsverfahrens können im Normalbetrieb das erste Absperrventil und das zweite Absperrventil in den offenen Zustand überführt werden, und das dritte Absperrventil und das vierte Absperrventil können in den geschlossenen Zustand überführt werden, wobei zur Druckerhöhung oder zur Druckreduzierung oder zum Druckhalten in den Bremskreisen der Antrieb des ersten Druckerzeugers entsprechend angesteuert wird.

In weiterer vorteilhafter Ausgestaltung des Betriebsverfahrens können im Normalbetrieb zur individuellen Druckerhöhung in einer zugeordneten Radbremse das zugehörige Einlassventil geöffnet und das zugehörige Auslassventil geschlossen werden. Zum individuellen Druckhalten in einer zugeordneten Radbremse können das zugehörige Einlassventil und das zugehörige Auslassventil geschlossen werden. Zur individuellen Druckreduzierung in einer zugeordneten Radbremse können das zugehörige Einlassventil geschlossen und das zugehörige Auslassventil geöffnet werden.

In weiterer vorteilhafter Ausgestaltung des Betriebsverfahrens können bei Ausfall des Hauptsystems das erste Absperrventil und das zweite Absperrventil in den geschlossenen Zustand überführt werden, und das dritte Absperrventil und das vierte Absperrventil können in den offenen Zustand überführt werden, wobei zur Druckerhöhung oder zur Druckreduzierung oder zum Druckhalten in den Bremskreisen der Antrieb des zweiten Druckerzeugers entsprechend angesteuert wird.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockdiagramm eines Ausführungsbeispiels eines erfindungsgemäßen mehrkreisigen hydraulisch offenen Bremssystems ohne mechanischen und/oder hydraulischen Durchgriff über den Fahrer, insbesondere für ein hochautomatisiertes oder autonomes Fahrzeug.
Fig. 2 zeigt ein schematisches hydraulisches Schaltbild eines ersten Ausführungsbeispiels eines erfindungsgemäßen mehrkreisigen hydraulisch offenen Bremssystems ohne mechanischen und/oder hydraulischen Durchgriff über den Fahrer, insbesondere für ein hochautomatisiertes oder autonomes Fahrzeug.
Fig. 3 zeigt ein schematisches hydraulisches Schaltbild eines zweiten Ausführungsbeispiels eines erfindungsgemäßen mehrkreisigen hydraulisch offenen Bremssystems ohne mechanischen und/oder hydraulischen Durchgriff über den Fahrer, insbesondere für ein hochautomatisiertes oder autonomes Fahrzeug.
Fig. 4 zeigt ein schematisches hydraulisches Schaltbild eines dritten Ausführungsbeispiels eines erfindungsgemäßen mehrkreisigen hydraulisch offenen Bremssystems ohne mechanischen und/oder hydraulischen Durchgriff über den Fahrer, insbesondere für ein hochautomatisiertes oder autonomes Fahrzeug.
Fig. 5 zeigt ein schematisches hydraulisches Schaltbild eines vierten Ausführungsbeispiels eines erfindungsgemäßen mehrkreisigen hydraulisch offenen Bremssystems ohne mechanischen und/oder hydraulischen Durchgriff über den Fahrer, insbesondere für ein hochautomatisiertes oder autonomes Fahrzeug.

### Ausführungsformen der Erfindung

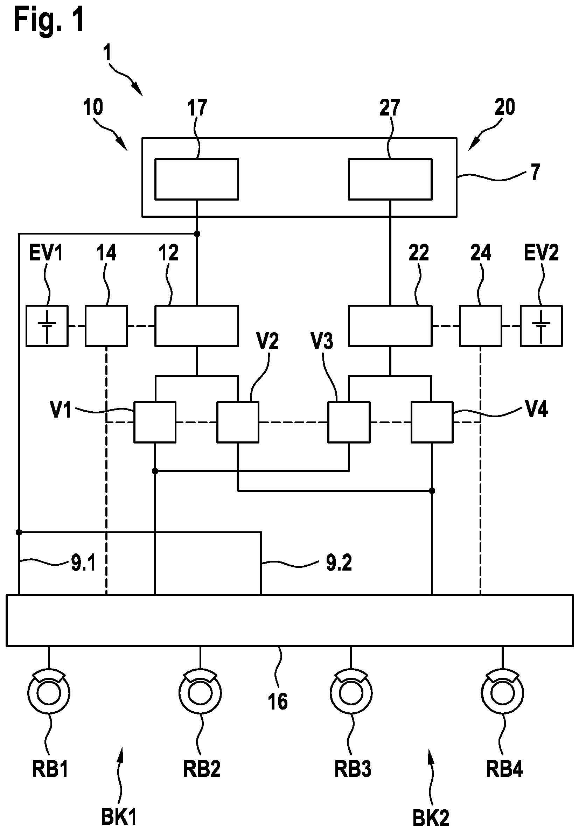

Wie aus Fig. 1 bis 5 ersichtlich ist, umfassen die dargestellten Ausführungsbeispiele eines erfindungsgemäßen mehrkreisigen hydraulisch offenen Bremssystems 1, 1A, 1B, 1C, 1D ohne mechanischen und/oder hydraulischen Durchgriff über den Fahrer, insbesondere für ein hochautomatisiertes oder autonomes Fahrzeug, jeweils mindestens zwei Radbremsen RB1, RB2, RB3, RB4, welche jeweils einem Bremskreis BK1, BK2 mit einem Druckablasspfad 9.1, 9.2 zugeordnet sind, zwei Druckerzeuger 12, 22, welche zwischen mindestens einem Fluidbehälter 17, 27 und den mindestens zwei Radbremsen RB1, RB2, RB3, RB4 hydraulisch parallel geschaltet sind, und eine Modulationseinheit 16, 16A, 16B, 16C, 16D zur hydraulischen Verbindung der Druckerzeuger 12, 22 mit den mindestens zwei Radbremsen RB1, RB2, RB3, RB4 und zur individuellen Bremsdruckmodulation in den mindestens zwei Radbremsen RB1, RB2, RB3, RB4. Hierbei ist ein erster Druckerzeuger 12 einem Hauptsystem 10, 10A, 10B, 10C, 10D zugeordnet, welches eine erste Energieversorgung EV1 und eine erste Auswerte- und Steuereinheit 14 umfasst, und über ein erstes Absperrventil V1 mit mindestens einer Radbremse RB1, RB2 eines ersten Bremskreises BK1 und über ein zweites Absperrventil V2 mit mindestens einer Radbremse RB3, RB4 eines zweiten Bremskreises BK2 verbindbar ist. Ein zweiter Druckerzeuger 22 ist einem Sekundärsystem 20, 20A, 20B, 20C, 20D zugeordnet, welches eine von der ersten Energieversorgung EV1 unabhängige zweite Energieversorgung EV2 und eine zweite Auswerte- und Steuereinheit 24 umfasst, und über ein drittes Absperrventil V3 mit mindestens einer Radbremse RB1, RB2 des ersten Bremskreises BK1 und über ein viertes Absperrventil V4 mit mindestens einer Radbremse RB3, RB4 des zweiten Bremskreises BK2 verbindbar ist. Die zweite Auswerte- und Steuereinheit 24 steuert den zweiten Druckerzeuger 22 an, wobei Komponenten der Modulationseinheit 16, 16A, 16B, 16C, 16D zur individuellen Bremsdruckmodulation dem Hauptsystem 10, 10A, 10B, 10C, 10D zugeordnet sind, so dass diese Komponenten der Modulationseinheit 16, 16A, 16B, 16C, 16D und der erste Druckerzeuger 12 von der ersten Auswerte- und Steuereinheit 14 angesteuert und von der ersten Energieversorgung EV1 mit Energie versorgt werden.

Die Absperrventile V1, V2, V3, V4 können von der ersten Auswerte- und Steuereinheit 14 und/oder von der zweiten Auswerte- und Steuereinheit 24 so angesteuert werden, dass bei Aktivierung von einem der beiden Druckerzeuger 12, 22 ein Hydraulikfluid nicht durch den anderen der beiden Druckerzeuger 12, 22 geleitet wird.

Wie aus Fig. 1 bis 5 weiter ersichtlich ist, umfassen die dargestellten Bremssysteme 1, 1A, 1B, 1C, 1D jeweils zwei Bremskreise BK1, BK2 mit jeweils einem Druckablasspfad 9.1, 9.2 und vier Radbremsen RB1, RB2, RB3, RB4, wobei eine erste Radbremse RB1 und eine zweite Radbremse RB2 und ein erster Druckablasspfad 9.1 einem ersten Bremskreis BK1 und eine dritte Radbremse RB3 und eine vierte Radbremse RB4 und ein zweiter Druckablasspfad 9.2 einem zweiten Bremskreis zugeordnet sind. Hierbei ist eine X-Aufteilung der Radbremsen RB1, RB2, RB3, RB4 auf die beiden Bremskreise BK1, BK2 möglich, d.h. die erste Radbremse RB1 ist am linken Vorderrad und die zweite Radbremse RB2 ist am rechten Hinterrad und die dritte Radbremse RB2 ist am rechten Vorderrad und die vierte Radbremse RB4 ist am linken Hinterrad angeordnet. Alternativ ist auch eine II-Aufteilung der Radbremsen RB1, RB2, RB3, RB4 auf die beiden Bremskreise BK1, BK2 möglich, d.h. die erste Radbremse RB1 ist am linken Vorderrad und die zweite Radbremse RB2 ist am rechten Vorderrad und die dritte Radbremse RB3 ist am linken Hinterrad und die vierte Radbremse RB4 ist am rechten Hinterrad angeordnet. Zudem ist ein erster Fluidbehälter 17 mit mindestens einer Fluidkammer 17.1, 17.2 dem Hauptsystem 10, 10A, 10B, 10C, 10D zugeordnet, und ein zweiter Fluidbehälter 27 mit mindestens einer Fluidkammer 27.1, 27.2 ist dem Sekundärsystem 20, 20A, 20B, 20C, 20D zugeordnet. Zudem können die beiden Fluidbehälter 17, 27 zu einem gemeinsamen Fluidbehälter 7 zusammengefasst werden.

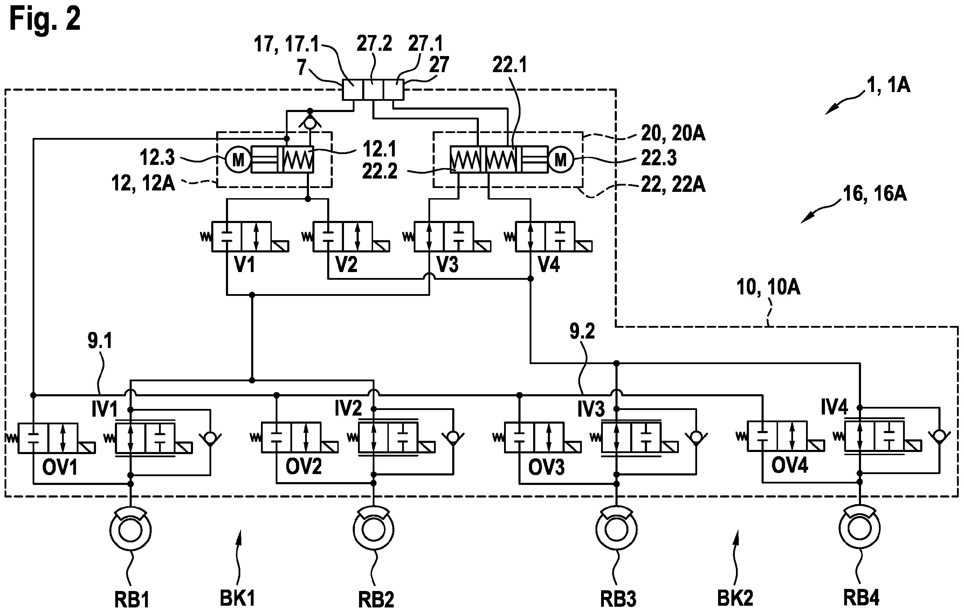

Wie aus Fig. 2 bis 5 weiter ersichtlich ist, ist der erste Druckerzeuger 12 in den dargestellten Ausführungsbeispielen des Bremssystems 1, 1A, 1B, 1C, 1D jeweils als Plungersystem 12A, 12B ausgeführt. Der zweite Druckerzeuger 22 ist in den dargestellten Ausführungsbeispielen des Bremssystems 1, 1A, 1B, 1C, 1D ebenfalls jeweils als Plungersystem 22A, 22B ausgeführt. Bei alternativen nicht dargestellten Ausführungsbeispielen können beide Druckerzeuger 12, 22 oder zumindest einer der beiden Druckerzeuger 12, 22 als Pumpensystem ausgeführt werden.

Wie aus Fig. 2 bis 5 weiter ersichtlich ist, umfasst die Modulationseinheit 16, 16A, 16B, 16C, 16D in den dargestellten Ausführungsbeispielen des Bremssystems 1, 1A, 1B, 1C, 1D für jede Radbremse RB1, RB2, RB3, RB4 jeweils ein Einlassventil IV1, IV2, IV3, IV4, welche als regelbare stromlos offene Magnetventile ausgeführt sind, und jeweils ein Auslassventil OV1, OV2, OV3, OV4, welche als elektromagnetische stromlos geschlossene Schaltventile ausgeführt sind. Alternativ können die Auslassventile OV1, OV2, OV3, OV4 als regelbare stromlos geschlossene Magnetventile ausgeführt werden. Hierbei sind ein erstes Einlassventil IV1 und ein erstes Auslassventil OV1 der ersten Radbremse RB1 zugeordnet. Ein zweites Einlassventil IV2 und ein zweites Auslassventil OV2 sind der zweiten Radbremse RB2 zugeordnet. Ein drittes Einlassventil IV3 und ein drittes Auslassventil OV3 sind der dritten Radbremse RB3 zugeordnet, und ein viertes Einlassventil IV4 und ein viertes Auslassventil OV4 sind der vierten Radbremse RB4 zugeordnet. Zudem wird während einer individuellen Bremsdruckmodulation in der mindestens einen Radbremse RB1, RB2, RB3, RB4 über ein zugeordnetes Auslassventil OV1, OV2, OV3, OV4 abgelassenes Bremsfluid aus der mindestens einen Radbremse RB1, RB2, RB3, RB4 über den mindestens einen Druckablasspfad 9.1, 9.2 entweder in den ersten Fluidbehälter 17 oder in den zweiten Fluidbehälter 27 zurückgeführt. In den dargestellten Ausführungsbeispielen wird das Bremsfluid bzw. Hydraulikfluid aus den Radbremsen RB1, RB2, RB3, RB4 in den ersten Fluidbehälter 17 zurückgeführt, welcher dem Hauptsystem 10, 10A, 10B, 10C, 10D zugeordnet ist.

Wie aus Fig. 2 bis 5 weiter ersichtlich ist, sind der erste Druckerzeuger 12, der zweite Druckerzeuger 22 und die Modulationseinheit 16 bei den dargestellten Ausführungsbeispielen in einem gemeinsamen Hydraulikblock angeordnet, in welchem auch die entsprechenden hydraulischen Verbindungsleitungen bzw. Verbindungskanäle ausgebildet sind. Zudem sind auch die Absperrventile V1, V2, V3, V4 in diesem gemeinsamen Hydraulikblock angeordnet. Bei einem alternativen nicht dargestellten Ausführungsbeispiel sind der erste Druckerzeuger 12 und die Modulationseinheit 16 in einem ersten Hydraulikblock angeordnet, und der zweite Druckerzeuger 22 ist in einem zweiten Hydraulikblock angeordnet. Bei diesem alternativen Ausführungsbeispiel ist der erste Fluidbehälter 17 mit dem ersten Hydraulikblock verbunden bzw. in den ersten Hydraulikblock integriert, und der zweite Fluidbehälter 27 ist mit dem zweiten Hydraulikblock verbunden bzw. in den zweiten Hydraulikblock integriert.

Wie aus Fig. 2 weiter ersichtlich ist, ist der erste Druckerzeuger 12 im dargestellten ersten Ausführungsbeispiel des Bremssystems 1A einkreisig ausgeführt und umfasst ein Plungersystem 12A mit einer Kolbenzylindereinheit, welche einen Kolben und eine Kammer 12.1 aufweist, und einem Antrieb 12.3. Der Antrieb 12.3 ist als Elektromotor ausgeführt und bewegt den Kolben gegen die Kraft einer Rückstellfeder zur Druckeinstellung in der Kammer 12.1. Der zweite Druckerzeuger 22 ist zweikreisig ausgeführt und umfasst ein Plungersystem 22A mit einer Kolben-Zylindereinheit, welche zwei Kolben und zwei Kammern 22.1, 22.2 aufweist, und einem Antrieb 22.3. Der Antrieb 22.3 ist als Elektromotor ausgeführt und bewegt die beiden Kolben gegen die Kraft von korrespondierenden Rückstellfedern zur Druckeinstellung in den Kammern 22.1, 22.2.

Wie aus Fig. 2 weiter ersichtlich ist, umfasst der erste Fluidbehälter 17 nur eine Fluidkammer 17.1, welche hydraulisch mit der Kammer 12.1 des ersten Plungersystems 12A und den Druckablasspfaden 9.1, 9.2 verbunden ist. Somit ist die Kammer 12.1 des ersten Plungersystems 12A dem ersten Bremskreis BK1 und dem zweiten Bremskreis BK2 zugeordnet. Zudem ist für den ersten Druckerzeuger 12 eine Saugleitung mit Rückschlagventil vorgesehen, welche die Kammer 12.1 des ersten Plungersystems 12A zusätzlich mit dem ersten Fluidbehälter 17 hydraulisch verbindet. Der zweite Fluidbehälter 27 umfasst zwei Fluidkammern 27.1, 27.2, wobei eine erste Fluidkammer 27.1 hydraulisch mit einer ersten Kammer 22.1 des zweiten Plungersystems 22A und eine zweite Fluidkammer 27.2 hydraulisch mit einer zweiten Kammer 22.2 des zweiten Plungersystems 22A verbunden ist. Zudem ist die erste Kammer 22.1 dem zweiten Bremskreis BK2 und die zweite Kammer 22.2A ist dem ersten Bremskreis BK1 zugeordnet. Die Kolben-Zylindereinheiten des ersten und zweiten Plungersystems 12A, 22A sind im stromlosen Zustand durchfließbar ausgeführt so dass Bremsfluid durch die korrespondierenden Kammern 12.1, 22.1, 22.2 fließen kann.

Wie aus Fig. 2 weiter ersichtlich ist, sind das erste Absperrventil V1 und das zweite Absperrventil V2 im dargestellten Ausführungsbeispiel jeweils als stromlos geschlossene Magnetventile ausgeführt, und das dritte Absperrventil V3 und das vierte Absperrventil V4 sind als stromlos offene Magnetventile ausgeführt, wobei die erste Auswerte- und Steuereinheit 14 die Absperrventile V1, V2, V3, V4 ansteuert. Somit gehören die Absperrventile V1, V2, V3, V4 bei dieser Ausführungsform zum Hauptsystem 10A und werden von der ersten Energieversorgungseinheit EV1 mit Energie versorgt. Durch die stromlos geschlossene Ausführung des ersten Absperrventils V1 und des zweiten Absperrventils V1 ist der erste Druckerzeuger 12 hydraulisch von den Radbremsen RB1, RB2, RB3, RB4 getrennt. Durch die stromlos offene Ausführung des dritten Absperrventils V3 und des vierten Absperrventils V4 ist der zweite Druckerzeuger 22 hydraulisch mit den Radbremsen RB1, RB2, RB3, RB4 verbunden. Daher ist im Normalbetrieb, in welchem der erste Druckerzeuger 12 den Druck für die Radbremsen RB1, RB2, RB3, RB4 erzeugt, eine Ansteuerung der Absperrventile V1, V2, V3, V4 erforderlich, um den ersten Druckerzeuger 12 hydraulisch mit den Radbremsen RB1, RB2, RB3, RB4 zu verbinden und den zweiten Druckerzeuger 22 hydraulisch von den Radbremsen RB1, RB2, RB3, RB4 zu trennen. Zudem sind die Radbremsen RB1, RB2, RB3, RB4 über den zweiten Druckerzeuger 22 mit dem zweiten Fluidbehälter 27 verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen durch das Sekundärsystem 20A".

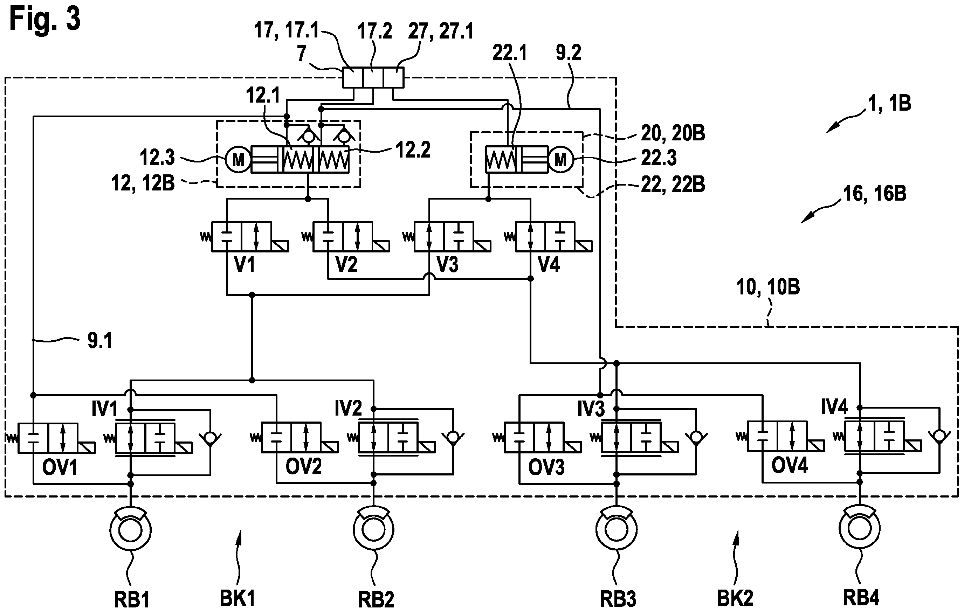

Wie aus Fig. 3 weiter ersichtlich ist, ist der erste Druckerzeuger 12 im dargestellten zweiten Ausführungsbeispiel des Bremssystems 1B zweikreisig ausgeführt und umfasst ein Plungersystem 12B mit einer Kolben-Zylindereinheit, welche zwei Kolben und zwei Kammern 12.1, 12.2 aufweist, und einem Antrieb 12.3. Der Antrieb 12.3 ist als Elektromotor ausgeführt und bewegt die beiden Kolben gegen die Kraft von korrespondierenden Rückstellfedern zur Druckeinstellung in den Kammern 12.1, 12.2. Der zweite Druckerzeuger 22 ist einkreisig ausgeführt und umfasst ein Plungersystem 22B mit einer Kolbenzylindereinheit, welche einen Kolben und eine Kammer 22.1 aufweist, und einem Antrieb 22.3. Der Antrieb 22.3 ist als Elektromotor ausgeführt und bewegt den Kolben gegen die Kraft einer Rückstellfeder zur Druckeinstellung in der Kammer 12.1.

Wie aus Fig. 3 weiter ersichtlich ist, umfasst der erste Fluidbehälter 17 zwei Fluidkammern 17.1, 17.2, wobei eine erste Fluidkammer 17.1 hydraulisch mit einer ersten Kammer 12.1 des ersten Plungersystems 12B und einem ersten Druckablasspfad 9.1 verbunden ist. Eine zweite Fluidkammer 17.2 ist hydraulisch mit einer zweiten Kammer 12.2 des ersten Plungersystems 12B und einem zweiten Druckablasspfad 9.2 verbunden. Zudem ist die erste Kammer 12.1 dem ersten Bremskreis BK1 und die zweite Kammer 12.2 ist dem zweiten Bremskreis BK2 zugeordnet. Zudem sind für den ersten Druckerzeuger 12 zwei Saugleitungen mit Rückschlagventil vorgesehen, welche die Kammern 12.1, 12.2 des ersten Plungersystems 12B zusätzlich mit dem ersten Fluidbehälter 17 hydraulisch verbinden. Der zweite Fluidbehälter 27 umfasst nur eine Fluidkammer 27.1, welche hydraulisch mit der Kammer 22.1 des zweiten Plungersystems 22B verbunden ist. Somit ist die Kammer 22.1 des zweiten Plungersystems 22B dem ersten Bremskreis BK1 und dem zweiten Bremskreis BK2 zugeordnet. Die Kolben-Zylindereinheiten des ersten und zweiten Plungersystems 12B, 22B sind im stromlosen Zustand durchfließbar ausgeführt so dass Bremsfluid durch die korrespondierenden Kammern 12.1, 12.2, 22.1 fließen kann.

Wie aus Fig. 3 weiter ersichtlich ist, sind das erste Absperrventil V1 und das zweite Absperrventil V2 im dargestellten Ausführungsbeispiel jeweils als stromlos offene Magnetventile ausgeführt, und das dritte Absperrventil V3 und das vierte Absperrventil V4 sind als stromlos geschlossene Magnetventile ausgeführt, wobei die zweite Auswerte- und Steuereinheit 14 die Absperrventile V1, V2, V3, V4 ansteuert. Somit gehören die Absperrventile V1, V2, V3, V4 bei dieser Ausführungsform zum Sekundärsystem 20B und werden von der zweiten Energieversorgungseinheit EV2 mit Energie versorgt. Durch die stromlos offene Ausführung des ersten Absperrventils V1 und des zweiten Absperrventils V1 ist der erste Druckerzeuger 12 hydraulisch mit den Radbremsen RB1, RB2, RB3, RB4 verbunden. Durch die stromlos geschlossene Ausführung des dritten Absperrventils V3 und des vierten Absperrventils V4 ist der zweite Druckerzeuger 22 hydraulisch von den Radbremsen RB1, RB2, RB3, RB4 getrennt. Daher ist im Normalbetrieb, in welchem der erste Druckerzeuger 12 den Druck für die Radbremsen RB1, RB2, RB3, RB4 erzeugt, eine Ansteuerung der Absperrventile V1, V2, V3, V4 nicht erforderlich, um den ersten Druckerzeuger 12 hydraulisch mit den Radbremsen RB1, RB2, RB3, RB4 zu verbinden und den zweiten Druckerzeuger 22 hydraulisch von den Radbremsen RB1, RB2, RB3, RB4 zu trennen. Zudem sind die Radbremsen RB1, RB2, RB3, RB4 über den ersten Druckerzeuger 22 mit dem ersten Fluidbehälter 17 verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen durch das Hauptsystem 10B".

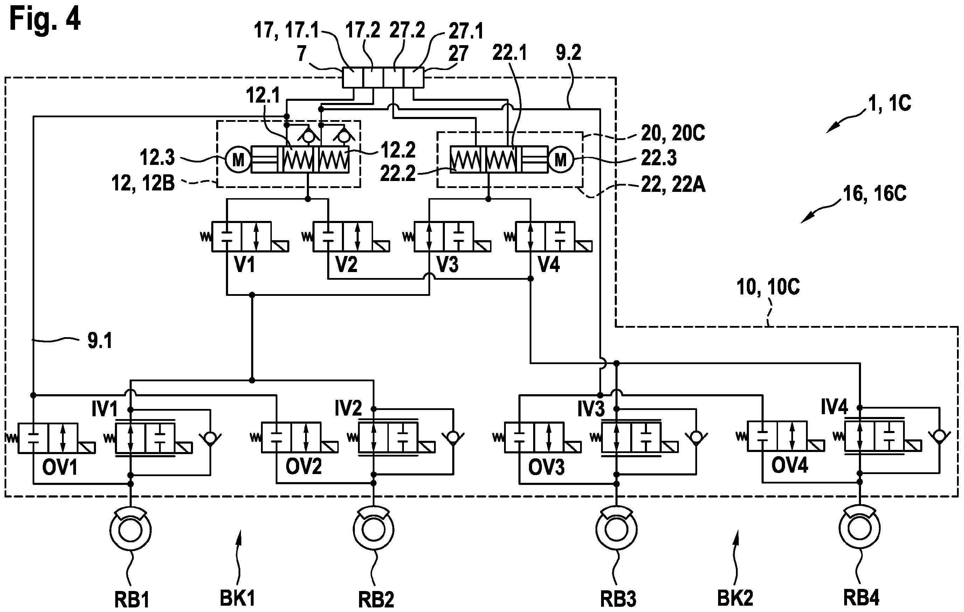

Wie aus Fig. 4 weiter ersichtlich ist, ist der erste Druckerzeuger 12 im dargestellten dritten Ausführungsbeispiel des Bremssystems 1C zweikreisig ausgeführt und umfasst ein Plungersystem 12B mit einer Kolben-Zylindereinheit, welche zwei Kolben und zwei Kammern 12.1, 12.2 aufweist, und einem Antrieb 12.3. Der Antrieb 12.3 ist als Elektromotor ausgeführt und bewegt die beiden Kolben gegen die Kraft von korrespondierenden Rückstellfedern zur Druckeinstellung in den Kammern 12.1, 12.2. Der zweite Druckerzeuger 22 ist zweikreisig ausgeführt und umfasst ein Plungersystem 22A mit einer Kolben-Zylindereinheit, welche zwei Kolben und zwei Kammern 22.1, 22.2 aufweist, und einem Antrieb 22.3. Der Antrieb 22.3 ist als Elektromotor ausgeführt und bewegt die beiden Kolben gegen die Kraft von korrespondierenden Rückstellfedern zur Druckeinstellung in den Kammern 22.1, 22.2.

Wie aus Fig. 4 weiter ersichtlich ist, umfasst der erste Fluidbehälter 17 zwei Fluidkammern 17.1, 17.2, wobei eine erste Fluidkammer 17.1 hydraulisch mit einer ersten Kammer 12.1 des ersten Plungersystems 12B und einem ersten Druckablasspfad 9.1 verbunden ist. Eine zweite Fluidkammer 17.2 ist hydraulisch mit einer zweiten Kammer 12.2 des ersten Plungersystems 12B und einem zweiten Druckablasspfad 9.2 verbunden. Zudem ist die erste Kammer 12.1 dem ersten Bremskreis BK1 und die zweite Kammer 12.2 ist dem zweiten Bremskreis BK2 zugeordnet. Zudem sind für den ersten Druckerzeuger 12 zwei Saugleitungen mit Rückschlagventil vorgesehen, welche die Kammern 12.1, 12.2 des ersten Plungersystems 12B zusätzlich mit dem ersten Fluidbehälter 17 hydraulisch verbinden. Der zweite Fluidbehälter 27 umfasst zwei Fluidkammern 27.1, 27.2, wobei eine erste Fluidkammer 27.1 hydraulisch mit einer ersten Kammer 22.1 des zweiten Plungersystems 22A und eine zweite Fluidkammer 27.2 hydraulisch mit einer zweiten Kammer 22.2 des zweiten Plungersystems 22A verbunden ist. Zudem ist die erste Kammer 22.1 dem zweiten Bremskreis BK2 und die zweite Kammer 22.2 ist dem ersten Bremskreis BK1 zugeordnet. Die Kolben-Zylindereinheiten des ersten und zweiten Plungersystems 12A, 22A sind im stromlosen Zustand durchfließbar ausgeführt so dass Bremsfluid durch die korrespondierenden Kammern 12.1, 12.2, 22.1, 22.2 fließen kann.

Wie aus Fig. 4 weiter ersichtlich ist, sind das erste Absperrventil V1 und das zweite Absperrventil V2 im dargestellten Ausführungsbeispiel jeweils als stromlos geschlossene Magnetventile ausgeführt, und das dritte Absperrventil V3 und das vierte Absperrventil V4 sind als stromlos offene Magnetventile ausgeführt, wobei die erste Auswerte- und Steuereinheit 14 die Absperrventile V1, V2, V3, V4 ansteuert. Somit gehören die Absperrventile V1, V2, V3, V4 bei dieser Ausführungsform zum Hauptsystem 10C und werden von der ersten Energieversorgungseinheit EV1 mit Energie versorgt. Durch die stromlos geschlossene Ausführung des ersten Absperrventils V1 und des zweiten Absperrventils V1 ist der erste Druckerzeuger 12 hydraulisch von den Radbremsen RB1, RB2, RB3, RB4 getrennt. Durch die stromlos offene Ausführung des dritten Absperrventils V3 und des vierten Absperrventils V4 ist der zweite Druckerzeuger 22 hydraulisch mit den Radbremsen RB1, RB2, RB3, RB4 verbunden. Daher ist im Normalbetrieb, in welchem der erste Druckerzeuger 12 den Druck für die Radbremsen RB1, RB2, RB3, RB4 erzeugt, eine Ansteuerung der Absperrventile V1, V2, V3, V4 erforderlich, um den ersten Druckerzeuger 12 hydraulisch mit den Radbremsen RB1, RB2, RB3, RB4 zu verbinden und den zweiten Druckerzeuger 22 hydraulisch von den Radbremsen RB1, RB2, RB3, RB4 zu trennen. Zudem sind die Radbremsen RB1, RB2, RB3, RB4 über den zweiten Druckerzeuger 22 mit dem zweiten Fluidbehälter 27 verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen durch das Sekundärsystem 20C".

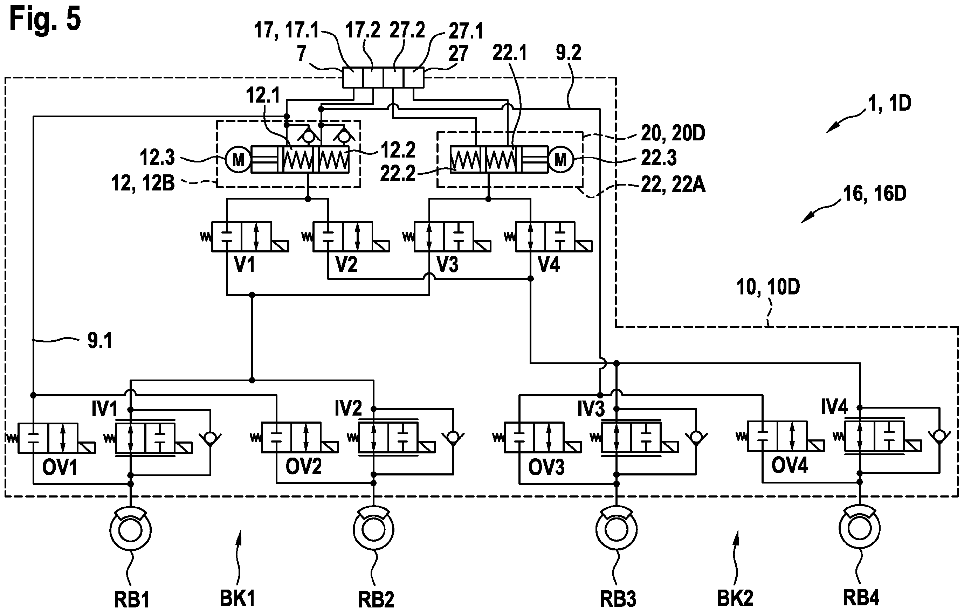

Wie aus Fig. 5 weiter ersichtlich ist, ist der erste Druckerzeuger 12 im dargestellten vierten Ausführungsbeispiel des Bremssystems 1D zweikreisig ausgeführt und umfasst ein Plungersystem 12B mit einer Kolben-Zylindereinheit, welche zwei Kolben und zwei Kammern 12.1, 12.2 aufweist, und einem Antrieb 12.3. Der Antrieb 12.3 ist als Elektromotor ausgeführt und bewegt die beiden Kolben gegen die Kraft von korrespondierenden Rückstellfedern zur Druckeinstellung in den Kammern 12.1, 12.2. Der zweite Druckerzeuger 22 ist zweikreisig ausgeführt und umfasst ein Plungersystem 22A mit einer Kolben-Zylindereinheit, welche zwei Kolben und zwei Kammern 22.1, 22.2 aufweist, und einem Antrieb 22.3. Der Antrieb 22.3 ist als Elektromotor ausgeführt und bewegt die beiden Kolben gegen die Kraft von korrespondierenden Rückstellfedern zur Druckeinstellung in den Kammern 22.1, 22.2.

Wie aus Fig. 5 weiter ersichtlich ist, umfasst der erste Fluidbehälter 17 zwei Fluidkammern 17.1, 17.2, wobei eine erste Fluidkammer 17.1 hydraulisch mit einer ersten Kammer 12.1 des ersten Plungersystems 12B und einem ersten Druckablasspfad 9.1 verbunden ist. Eine zweite Fluidkammer 17.2 ist hydraulisch mit einer zweiten Kammer 12.2 des ersten Plungersystems 12B und einem zweiten Druckablasspfad 9.2 verbunden. Zudem ist die erste Kammer 12.1 dem ersten Bremskreis BK1 und die zweite Kammer 12.2 ist dem zweiten Bremskreis BK2 zugeordnet. Zudem umfasst die Modulationseinheit 16C für den ersten Druckerzeuger 12 zwei Saugleitungen mit Rückschlagventil, welche die Kammern 12.1, 12.2 des ersten Plungersystems 12B zusätzlich mit dem ersten Fluidbehälter 17 hydraulisch verbinden. Der zweite Fluidbehälter 27 umfasst zwei Fluidkammern 27.1, 27.2, wobei eine erste Fluidkammer 27.1 hydraulisch mit einer ersten Kammer 22.1 des zweiten Plungersystems 22A und eine zweite Fluidkammer 27.2 hydraulisch mit einer zweiten Kammer 22.2 des zweiten Plungersystems 22A verbunden ist. Zudem ist die erste Kammer 22.1 dem zweiten Bremskreis BK2 und die zweite Kammer 22.2 ist dem ersten Bremskreis BK1 zugeordnet. Die Kolben-Zylindereinheiten des ersten und zweiten Plungersystems 12A, 22A sind im stromlosen Zustand durchfließbar ausgeführt so dass Bremsfluid durch die korrespondierenden Kammern 12.1, 12.2, 22.1, 22.2 fließen kann.

Wie aus Fig. 5 weiter ersichtlich ist, sind das erste Absperrventil V1 und das zweite Absperrventil V2 im dargestellten Ausführungsbeispiel jeweils als stromlos offene Magnetventile ausgeführt, und das dritte Absperrventil V3 und das vierte Absperrventil V4 sind als stromlos geschlossene Magnetventile ausgeführt, wobei die zweite Auswerte- und Steuereinheit 14 die Absperrventile V1, V2, V3, V4 ansteuert. Somit gehören die Absperrventile V1, V2, V3, V4 bei dieser Ausführungsform zum Sekundärsystem 20D und werden von der zweiten Energieversorgungseinheit EV2 mit Energie versorgt. Durch die stromlos offene Ausführung des ersten Absperrventils V1 und des zweiten Absperrventils V1 ist der erste Druckerzeuger 12 hydraulisch mit den Radbremsen RB1, RB2, RB3, RB4 verbunden. Durch die stromlos geschlossene Ausführung des dritten Absperrventils V3 und des vierten Absperrventils V4 ist der zweite Druckerzeuger 22 hydraulisch von den Radbremsen RB1, RB2, RB3, RB4 getrennt. Daher ist im Normalbetrieb, in welchem der erste Druckerzeuger 12 den Druck für die Radbremsen RB1, RB2, RB3, RB4 erzeugt, eine Ansteuerung der Absperrventile V1, V2, V3, V4 nicht erforderlich, um den ersten Druckerzeuger 12 hydraulisch mit den Radbremsen RB1, RB2, RB3, RB4 zu verbinden und den zweiten Druckerzeuger 22 hydraulisch von den Radbremsen RB1, RB2, RB3, RB4 zu trennen. Zudem sind die Radbremsen RB1, RB2, RB3, RB4 über den erstem Druckerzeuger 22 mit dem ersten Fluidbehälter 17 verbunden, um im stromlosen bzw. passiven Zustand eine temperaturbedingte Ausdehnung des Bremsfluids durch sogenanntes "Atmen" kompensieren zu können. Daher spricht man in diesem Zusammenhang von "Atmen durch das Hauptsystem 10D".

Bei dem erfindungsgemäßen Betriebsverfahren für das oben beschriebene mehrkreisiges hydraulisch offene Bremssystem 1, 1A, 1B, 1C, 1D ohne mechanischen und/oder hydraulischen Durchgriff über den Fahrer, insbesondere für ein hochautomatisiertes oder autonomes Fahrzeug, erhöht oder reduziert oder hält im Normalbetrieb das Hauptsystem 10, 10A, 10B, 10C, 10D mittels des ersten Druckerzeugers 12 den Druck in den Bremskreisen BK1, BK2 und führt mittels der Modulationseinheit 16, 16A, 16B, 16C, 16D die individuelle Bremsdruckmodulation in den mindestens zwei Radbremsen RB1, RB2, RB3, RB4 aus. Bei Ausfall des Hauptsystems 10, 10A, 10B, 10C, 10D erhöht oder reduziert oder hält das Sekundärsystem 20, 20A, 20B, 20C, 20D mittels des zweiten Druckerzeugers 22 den Druck in den Bremskreisen BK1, BK2 und die individuelle Bremsdruckmodulation in den mindestens zwei Radbremsen RB1, RB2, RB3, RB4 entfällt.

Im Normalbetrieb werden das erste Absperrventil V1 und das zweite Absperrventil V2 in den offenen Zustand überführt, und das dritte Absperrventil V3 und das vierte Absperrventil V4 werden in den geschlossenen Zustand überführt. Zur Druckerhöhung oder zur Druckreduzierung oder zum Druckhalten in den Bremskreisen BK1, BK2 wird der Antrieb 12.3 des ersten Druckerzeugers 12 entsprechend angesteuert.

Des Weiteren wird im Normalbetrieb zur individuellen Druckerhöhung in einer zugeordneten Radbremse RB1, RB2, RB3, RB4 das zugehörige Einlassventil IV1, IV2, IV3, IV4 geöffnet und das zugehörige Auslassventil OV1, OV2, OV3, OV4 geschlossen. Zum individuellen Druckhalten in einer zugeordneten Radbremse RB1, RB2, RB3, RB4 werden das zugehörige Einlassventil IV1, IV2, IV3, IV4 und das zugehörige Auslassventil OV1, OV2, OV3, OV4 geschlossen. Zur individuellen Druckreduzierung in einer zugeordneten Radbremse RB1, RB2, RB3, RB4 werden das zugehörige Einlassventil IV1, IV2, IV3, IV4 geschlossen und das zugehörige Auslassventil OV1, OV2, OV3, OV4 geöffnet.

Bei Ausfall des Hauptsystems 10, 10A, 10B, 10C, 10D werden das erste Absperrventil V1 und das zweite Absperrventil V2 in den geschlossenen Zustand überführt, und das dritte Absperrventil V3 und das vierte Absperrventil V4 werden in den offenen Zustand überführt, wobei zur Druckerhöhung oder zur Druckreduzierung oder zum Druckhalten in den Bremskreisen BK1, BK2 der Antrieb 22.3 des zweiten Druckerzeugers 22 entsprechend angesteuert wird.

Bei einer einkreisigen Ausführung des ersten Druckerzeugers 12 wird bei einem erkannten Leck in einem Bremskreis BK1, BK2 das zugehörige Absperrventil V1, V2 geschlossen. Bei einem erkannten Leck in einer der Radbremsen RB1, RB2, RB3, RB4 wird das zugehörige Einlassventil IV1, IV2, IV3, IV4 geschlossen.

Dieses Verfahren kann beispielsweise in Software oder Hardware oder in einer Mischform aus Software und Hardware beispielsweise in einem Steuergerät implementiert sein.

Ausführungsformen der vorliegenden Erfindung stellen ein mehrkreisiges hydraulisch offenes Bremssystem ohne mechanischen und/oder hydraulischen Durchgriff durch den Fahrer, insbesondere für ein hochautomatisiertes oder autonomes Fahrzeug, und ein korrespondierendes Betriebsverfahren zur Verfügung, wobei die eingesetzten hydraulisch parallel geschalteten Druckerzeuger durch die hydraulische Verschaltung über die Modulationseinheit auf alle Radbremsen des Fahrzeugs wirken.

## Patentansprüche

1. Mehrkreisiges hydraulisch offenes Bremssystem (1) ohne mechanischen und/oder hydraulischen Durchgriff über den Fahrer, insbesondere für ein hochautomatisiertes oder autonomes Fahrzeug, mit mindestens zwei Radbremsen (RB1, RB2, RB3, RB4), welche jeweils einem Bremskreis (BK1, BK2) mit einem Druckablasspfad (9.1, 9.2) zugeordnet sind, zwei Druckerzeugern (12, 22), welche zwischen mindestens einem Fluidbehälter (17, 27) und den mindestens zwei Radbremsen (RB1, RB2, RB3, RB4) hydraulisch parallel geschaltet sind, und einer Modulationseinheit (16) zur hydraulischen Verbindung der Druckerzeuger (12, 22) mit den mindestens zwei Radbremsen (RB1, RB2, RB3, RB4) und zur individuellen Bremsdruckmodulation in den mindestens zwei Radbremsen (RB1, RB2, RB3, RB4), wobei ein erster (12) der beiden Druckerzeuger (12, 22) einem Hauptsystem (10) zugeordnet ist, welches eine erste Energieversorgung (EV1) und eine erste Auswerte- und Steuereinheit (14) umfasst, wobei ein zweiter (22) der beiden Druckerzeuger (12, 22) einem Sekundärsystem (20) zugeordnet ist, welches eine von der ersten Energieversorgung (EV1) unabhängige zweite Energieversorgung (EV2) und eine zweite Auswerte- und Steuereinheit (24) umfasst, wobei die zweite Auswerte- und Steuereinheit (24) den zweiten Druckerzeuger (22) ansteuert, wobei Komponenten der Modulationseinheit (16) zur individuellen Bremsdruckmodulation dem Hauptsystem (10) zugeordnet sind, so dass diese Komponenten der Modulationseinheit (16) und der erste Druckerzeuger (12) von der ersten Auswerte- und Steuereinheit (14) angesteuert und von der ersten Energieversorgung (EV1) mit Energie versorgt werden, **dadurch gekennzeichnet, dass** der erste Druckerzeuger (12) der beiden Druckerzeuger (12, 22) über ein erstes Absperrventil (V1) mit mindestens einer Radbremse (RB1, RB2) des ersten Bremskreises (BK1) und über ein zweites Absperrventil (V2) mit mindestens einer Radbremse (RB3, RB4) des zweiten Bremskreises (BK2) verbindbar ist, wobei der zweite Druckerzeuger (22) der beiden Druckerzeuger (12, 22) über ein drittes Absperrventil (V3) mit mindestens einer Radbremse (RB1, RB2) des ersten Bremskreises (BK1) und über ein viertes Absperrventil (V4) mit mindestens einer Radbremse (RB3, RB4) des zweiten Bremskreises (BK2) verbindbar ist, wobei die Absperrventile (V1, V2, V3, V4) von der ersten Auswerte- und Steuereinheit (14) und/oder von der zweiten Auswerte- und Steuereinheit (24) so ansteuerbar sind, dass bei Aktivierung von einem der beiden Druckerzeuger (12, 22) ein Hydraulikfluid nicht durch den anderen der beiden Druckerzeuger (12, 22) geleitet wird.

2. Bremssystem (1) nach Anspruch 1, **dadurch gekennzeichnet, dass** der erste Druckerzeuger (12) einkreisig oder zweikreisig ausgeführt ist.

3. Bremssystem (1) nach Anspruch 1 oder 2, **dadurch gekennzeichnet, dass** der zweite Druckerzeuger (22) einkreisig oder zweikreisig ausgeführt ist.

4. Bremssystem (1) nach einem der Ansprüche 1 bis 3, **dadurch gekennzeichnet, dass** das erste Absperrventil (V1) und das zweite Absperrventil (V2) jeweils als stromlos geschlossene Magnetventile ausgeführt sind, und das dritte Absperrventil (V3) und das vierte Absperrventil (V4) als stromlos offene Magnetventile ausgeführt sind, wobei die erste Auswerte- und Steuereinheit (14) die Absperrventile (V1, V2, V3, V4) ansteuert.

5. Bremssystem (1) nach einem der Ansprüche 1 bis 3, **dadurch gekennzeichnet, dass** das erste Absperrventil (V1) und das zweite Absperrventil (V2) jeweils als stromlos offene Magnetventile ausgeführt sind, und das dritte Absperrventil (V3) und das vierte Absperrventil (V4) als stromlos geschlossene Magnetventile ausgeführt sind, wobei die zweite Auswerte- und Steuereinheit (24) die Absperrventile (V1, V2, V3, V4) ansteuert.

6. Bremssystem (1) nach einem der Ansprüche 1 bis 5, **dadurch gekennzeichnet, dass** das Hauptsystem (10) und das Sekundärsystem (20) einen gemeinsamen Fluidbehälter (7) aufweisen oder ein erster Fluidbehälter (17) mit mindestens einer Fluidkammer (17.1, 17.2) dem Hauptsystem (10) zugeordnet ist, und ein zweiter Fluidbehälter (27) mit mindestens einer Fluidkammer (27.1, 27.2) dem Sekundärsystem (20) zugeordnet ist.

7. Bremssystem (1) nach einem der Ansprüche 1 bis 6, **dadurch gekennzeichnet, dass** der erste Druckerzeuger (12) als Plungersystem (12A) oder als Pumpensystem ausgeführt ist.

8. Bremssystem (1) nach Anspruch 7, **dadurch gekennzeichnet, dass** für den ersten Druckerzeuger (12) mindestens eine Saugleitung mit Rückschlagventil vorgesehen ist, welche den ersten Druckerzeuger (12) zusätzlich mit dem ersten Fluidbehälter (17) hydraulisch verbindet.

9. Bremssystem (1) nach einem der Ansprüche 1 bis 8, **dadurch gekennzeichnet, dass** der zweite Druckerzeuger (22) als Plungersystem (22A) oder als Pumpensystem ausgeführt ist.

10. Bremssystem (1) nach einem der Ansprüche 7 bis 9, **dadurch gekennzeichnet, dass** das Plungersystem (12A, 22A) eine Kolben-Zylindereinheit mit mindestens einem Kolben und mindestens einer Kammer (12.1, 12.2, 22.1, 22.2) und mit einem Antrieb (12.3, 22.3) aufweist, wobei der Antrieb (12.3, 22.3) den mindestens einen Kolben gegen die Kraft einer Rückstellfeder zur Druckeinstellung in der mindestens einen Kammer (12.1, 12.2, 22.1, 22.2) bewegt.

11. Bremssystem (1) nach einem der Ansprüche 7 bis 10, **dadurch gekennzeichnet, dass** das Pumpensystem mindestens eine Pumpe und mindestens einen Antrieb aufweist, welcher die mindestens eine Pumpe antreibt.

12. Bremssystem (1) nach einem der Ansprüche 6 bis 11, **dadurch gekennzeichnet, dass** während einer individuellen Bremsdruckmodulation in der mindestens einen Radbremse (RB1, RB2, RB3, RB4) aus der mindestens einen Radbremse (RB1, RB2, RB3, RB4) abgelassenes Bremsfluid über den mindestens einen Druckablasspfad (9.1, 9.2) entweder in den ersten Fluidbehälter (17) oder in den zweiten Fluidbehälter (27) zurückgeführt wird.

13. Bremssystem (1) nach einem der Ansprüche 1 bis 12, **dadurch gekennzeichnet, dass** der erste Druckerzeuger (12), der zweite Druckerzeuger (22) und die Modulationseinheit (16) in einem gemeinsamen Hydraulikblock angeordnet sind.

14. Bremssystem (1) nach einem der Ansprüche 1 bis 12, **dadurch gekennzeichnet, dass** der erste Druckerzeuger (12) und die Modulationseinheit (16) in einem ersten Hydraulikblock angeordnet sind, und der zweite Druckerzeuger (22) in einem zweiten Hydraulikblock angeordnet ist.

15. Betriebsverfahren für ein mehrkreisiges hydraulisch offenes Bremssystem (1) ohne mechanischen und/oder hydraulischen Durchgriff über den Fahrer, insbesondere für ein hochautomatisiertes oder autonomes Fahrzeug, welches nach zumindest einem der Ansprüche 1 bis 14 ausgeführt ist, wobei im Normalbetrieb das Hauptsystem (10) mittels des ersten Druckerzeugers (12) der beiden Druckerzeuger (12, 22) den Druck in den Bremskreisen (BK1, BK2) erhöht oder reduziert oder hält und mittels der Modulationseinheit (16) die individuelle Bremsdruckmodulation in den mindestens zwei Radbremsen (RB1, RB2, RB3, RB4) ausführt, wobei bei Ausfall des Hauptsystems (10) das Sekundärsystem (20) mittels des zweiten Druckerzeugers (22) der beiden Druckerzeuger (12,22) den Druck in den Bremskreisen (BK1, BK2) erhöht oder reduziert oder hält und die individuelle Bremsdruckmodulation in den mindestens zwei Radbremsen (RB1, RB2, RB3, RB4) entfällt.

16. Betriebsverfahren nach Anspruch 16, **dadurch gekennzeichnet, dass** im Normalbetrieb das erste Absperrventil (V1) und das zweite Absperrventil (V2) in den offenen Zustand überführt werden und das dritte Absperrventil (V3) und das vierte Absperrventil (V4) in den geschlossenen Zustand überführt werden, wobei zur Druckerhöhung oder zur Druckreduzierung oder zum Druckhalten in den Bremskreisen (BK1, BK2) der Antrieb (12.3) des ersten Druckerzeugers (12) entsprechend angesteuert wird.

17. Betriebsverfahren nach Anspruch 16 oder 17, **dadurch gekennzeichnet, dass** im Normalbetrieb zur individuellen Druckerhöhung in einer zugeordneten Radbremse (RB1, RB2, RB3, RB4) das zugehörige Einlassventil (IV1, IV2, IV3, IV4) geöffnet und das zugehörige Auslassventil (OV1, OV2, OV3, OV4) geschlossen wird, wobei zum individuellen Druckhalten in einer zugeordneten Radbremse (RB1, RB2, RB3, RB4) das zugehörige Einlassventil (IV1, IV2, IV3, IV4) und das zugehörige Auslassventil (OV1, OV2, OV3, OV4) geschlossen werden, und wobei zur individuellen Druckreduzierung in einer zugeordneten Radbremse (RB1, RB2, RB3, RB4) das zugehörige Einlassventil (IV1, IV2, IV3, IV4) geschlossen und das zugehörige Auslassventil (OV1, OV2, OV3, OV4) geöffnet werden.

18. Betriebsverfahren nach einem der Ansprüche 16 bis 18, **dadurch gekennzeichnet, dass** bei Ausfall des Hauptsystems (10) das erste Absperrventil (V1) und das zweite Absperrventil (V2) in den geschlossenen Zustand überführt werden und das dritte Absperrventil (V3) und das vierte Absperrventil (V4) in den offenen Zustand überführt werden, wobei zur Druckerhöhung oder zur Druckreduzierung oder zum Druckhalten in den Bremskreisen (BK1, BK2) der Antrieb (22.3) des zweiten Druckerzeugers (22) entsprechend angesteuert wird.

## Claims

1. Multi-circuit hydraulically open brake system (1) without mechanical and/or hydraulic intervention via the driver, in particular for a highly automated or autonomous vehicle, having at least two wheel brakes (RB1, RB2, RB3, RB4) which are each assigned to a brake circuit (BK1, BK2) with a pressure discharge path (9.1, 9.2), having two pressure generators (12, 22) which are hydraulically connected in parallel between at least one fluid container (17, 27) and the at least two wheel brakes (RB1, RB2, RB3, RB4), and having a modulation unit (16) for hydraulic connection of the pressure generators (12, 22) to the at least two wheel brakes (RB1, RB2, RB3, RB4) and for individual brake-pressure modulation in the at least two wheel brakes (RB1, RB2, RB3, RB4), wherein a first pressure generator (12) of the two pressure generators (12, 22) is assigned to a main system (10), which main system comprises a first energy supply (EV1) and a first evaluation and control unit (14), wherein a second pressure generator (22) of the two pressure generators (12, 22) is assigned to a secondary system (20), which secondary system comprises a second energy supply (EV2), which is independent of the first energy supply (EV1), and a second evaluation and control unit (24), wherein the second evaluation and control unit (24) controls the second pressure generator (22), wherein components of the modulation unit (16), for individual brake-pressure modulation, are assigned to the main system (10), so that said components of the modulation unit (16) and the first pressure generator (12) are controlled by the first evaluation and control unit (14) and are supplied with energy by the first energy supply (EV1), **characterized in that** the first pressure generator (12) of the two pressure generators (12, 22) is connectable to at least one wheel brake (RB1, RB2) of the first brake circuit (BK1) via a first shut-off valve (V1) and to at least one wheel brake (RB3, RB4) of the second brake circuit (BK2) via a second shut-off valve (V2), wherein the second pressure generator (22) of the two pressure generators (12, 22) is connectable to at least one wheel brake (RB1, RB2) of the first brake circuit (BK1) via a third shut-off valve (V3) and to at least one wheel brake (RB3, RB4) of the second brake circuit (BK2) via a fourth shut-off valve (V4), wherein the shut-off valves (V1, V2, V3, V4) are controllable by the first evaluation and control unit (14) and/or by the second evaluation and control unit (24) in such a way that, with activation of one of the two pressure generators (12, 22), a hydraulic fluid is not conducted through the other one of the two pressure generators (12, 22) .

2. Brake system (1) according to Claim 1, **characterized in that** the first pressure generator (12) is of one-circuit or two-circuit configuration.

3. Brake system (1) according to Claim 1 or 2, **characterized in that** the second pressure generator (22) is of one-circuit or two-circuit configuration.

4. Brake system (1) according to one of Claims 1 to 3, **characterized in that** the first shut-off valve (V1) and the second shut-off valve (V2) are each in the form of solenoid valves which are closed when electrically deenergized, and the third shut-off valve (V3) and the fourth shut-off valve (V4) are in the form of solenoid valves which are open when electrically deenergized, wherein the first evaluation and control unit (14) controls the shut-off valves (V1, V2, V3, V4).

5. Brake system (1) according to one of Claims 1 to 3, **characterized in that** the first shut-off valve (V1) and the second shut-off valve (V2) are each in the form of solenoid valves which are open when electrically deenergized, and the third shut-off valve (V3) and the fourth shut-off valve (V4) are in the form of solenoid valves which are closed when electrically deenergized, wherein the second evaluation and control unit (24) controls the shut-off valves (V1, V2, V3, V4).

6. Brake system (1) according to one of Claims 1 to 5, **characterized in that** the main system (10) and the secondary system (20) have a common fluid container (7), or a first fluid container (17) having at least one fluid chamber (17.1, 17.2) is assigned to the main system (10) and a second fluid container (27) having at least one fluid chamber (27.1, 27.2) is assigned to the secondary system (20).

7. Brake system (1) according to one of Claims 1 to 6, **characterized in that** the first pressure generator (12) is in the form of a plunger system (12A) or in the form of a pump system.

8. Brake system (1) according to Claim 7, **characterized in that**, for the first pressure generator (12), provision is made of at least one suction line with check valve, which suction line hydraulically connects the first pressure generator (12) additionally to the first fluid container (17).

9. Brake system (1) according to one of Claims 1 to 8, **characterized in that** the second pressure generator (22) is in the form of a plunger system (22A) or in the form of a pump system.

10. Brake system (1) according to one of Claims 7 to 9, **characterized in that** the plunger system (12A, 22A) has a piston/cylinder unit with at least one piston and at least one chamber (12.1, 12.2, 22.1, 22.2) and with a drive (12.3, 22.3), wherein the drive (12.3, 22.3) moves the at least one piston counter to the force of a restoring spring for setting of the pressure in the at least one chamber (12.1, 12.2, 22.1, 22.2).

11. Brake system (1) according to one of Claims 7 to 10, **characterized in that** the pump system has at least one pump and at least one drive which drives the at least one pump.

12. Brake system (1) according to one of Claims 6 to 11, **characterized in that**, during an individual brake-pressure modulation in the at least one wheel brake (RB1, RB2, RB3, RB4), brake fluid discharged from the at least one wheel brake (RB1, RB2, RB3, RB4) is returned via the at least one pressure discharge path (9.1, 9.2) either into the first fluid container (17) or into the second fluid container (27) .

13. Brake system (1) according to one of Claims 1 to 12, **characterized in that** the first pressure generator (12), the second pressure generator (22) and the modulation unit (16) are arranged in a common hydraulic block.

14. Brake system (1) according to one of Claims 1 to 12, **characterized in that** the first pressure generator (12) and the modulation unit (16) are arranged in a first hydraulic block, and the second pressure generator (22) is arranged in a second hydraulic block.

15. Operating method for a multi-circuit hydraulically open brake system (1) without mechanical and/or hydraulic intervention via the driver, in particular for a highly automated or autonomous vehicle, which brake system is designed according to at least one of Claims 1 to 14, wherein the main system (10), during normal operation, by means of the first pressure generator (12) of the two pressure generators (12, 22), increases or reduces or maintains the pressure in the brake circuits (BK1, BK2) and, by means of the modulation unit (16), performs the individual brake-pressure modulation in the at least two wheel brakes (RB1, RB2, RB3, RB4), wherein, in the event of failure of the main system (10), the secondary system (20), by means of the second pressure generator (22) of the two pressure generators (12, 22), increases or reduces or maintains the pressure in the brake circuits (BK1, BK2) and the individual brake-pressure modulation in the at least two wheel brakes (RB1, RB2, RB3, RB4) is not applied.

16. Operating method according to Claim 16, **characterized in that**, during normal operation, the first shut-off valve (V1) and the second shut-off valve (V2) are transferred into the open state and the third shut-off valve (V3) and the fourth shut-off valve (V4) are transferred into the closed state, wherein, for increase of pressure or for reduction of pressure or for maintenance of pressure in the brake circuits (BK1, BK2), the drive (12.3) of the first pressure generator (12) is controlled accordingly.

17. Operating method according to Claim 16 or 17, **characterized in that**, during normal operation, for individual increase of pressure in an assigned wheel brake (RB1, RB2, RB3, RB4), the associated inlet valve (IV1, IV2, IV3, IV4) is opened and the associated outlet valve (OV1, OV2, OV3, OV4) is closed, wherein, for individual maintenance of pressure in an assigned wheel brake (RB1, RB2, RB3, RB4), the associated inlet valve (IV1, IV2, IV3, IV4) and the associated outlet valve (OV1, OV2, OV3, OV4) are closed, and wherein, for individual reduction of pressure in an assigned wheel brake (RB1, RB2, RB3, RB4), the associated inlet valve (IV1, IV2, IV3, IV4) is closed and the associated outlet valve (OV1, OV2, OV3, OV4) is opened.

18. Operating method according to one of Claims 16 to 18, **characterized in that**, in the event of failure of the main system (10), the first shut-off valve (V1) and the second shut-off valve (V2) are transferred into the closed state and the third shut-off valve (V3) and the fourth shut-off valve (V4) are transferred into the open state, wherein, for increase of pressure or for reduction of pressure or for maintenance of pressure in the brake circuits (BK1, BK2), the drive (22.3) of the second pressure generator (22) is controlled accordingly.

## Revendications

1. Système de freinage (1) hydrauliquement ouvert, à plusieurs circuits, sans intervention mécanique et/ou hydraulique par le conducteur, en particulier pour un véhicule hautement automatisé ou autonome, comprenant au moins deux freins de roue (RB1, RB2, RB3, RB4) qui sont respectivement associés à un circuit de freinage (BK1, BK2) pourvu d'un chemin de relâchement de pression (9.1, 9.2), deux générateurs de pression (12, 22) qui sont montés hydrauliquement en parallèle entre au moins un réservoir de fluide (17, 27) et les au moins deux freins de roue (RB1, RB2, RB3, RB4), et une unité de modulation (16) pour la connexion hydraulique des générateurs de pression (12, 22) auxdits au moins deux freins de roue (RB1, RB2, RB3, RB4) et pour la modulation individuelle de la pression de freinage dans les au moins deux freins de roue (RB1, RB2, RB3, RB4), dans lequel un premier (12) des deux générateurs de pression (12, 22) est associé à un système principal (10) qui comprend une première alimentation en énergie (EV1) et une première unité d'évaluation et de commande (14), dans lequel un deuxième (22) des deux générateurs de pression (12, 22) est associé à un système secondaire (20) qui comprend une deuxième alimentation en énergie (EV2) indépendante de la première alimentation en énergie (EV1) et une deuxième unité d'évaluation et de commande (24), la deuxième unité d'évaluation et de commande (24) pilotant le deuxième générateur de pression (22), dans lequel des composants de l'unité de modulation (16) sont associés au système principal (10) pour la modulation individuelle de la pression de freinage de sorte que ces composants de l'unité de modulation (16) et le premier générateur de pression (12) sont pilotés par la première unité d'évaluation et de commande (14) et sont alimentés en énergie par la première alimentation en énergie (EV1),
**caractérisé en ce que** le premier générateur de pression (12) des deux générateurs de pression (12, 22) peut être relié par une première soupape d'arrêt (V1) à au moins un frein de roue (RB1, RB2) du premier circuit de freinage (BK1) et peut être relié par une deuxième soupape d'arrêt (V2) à au moins un frein de roue (RB3, RB4) du deuxième circuit de freinage (BK2), dans lequel le deuxième générateur de pression (22) des deux générateurs de pression (12, 22) peut être relié par une troisième soupape d'arrêt (V3) à au moins un frein de roue (RB1, RB2) du premier circuit de freinage (BK1) et peut être relié par une quatrième soupape d'arrêt (V4) à au moins un frein de roue (RB3, RB4) du deuxième circuit de freinage (BK2), dans lequel les soupapes d'arrêt (V1, V2, V3, V4) peuvent être pilotées par la première unité d'évaluation et de commande (14) et/ou par la deuxième unité d'évaluation et de commande (24) de telle sorte que lors de l'activation d'un des deux générateurs de pression (12, 22) un fluide hydraulique ne soit pas conduit par l'autre des deux générateurs de pression (12, 22).

2. Système de freinage (1) selon la revendication 1, **caractérisé en ce que** le premier générateur de pression (12) est réalisé avec un circuit ou avec deux circuits.

3. Système de freinage (1) selon la revendication 1 ou 2, **caractérisé en ce que** le deuxième générateur de pression (22) est réalisé avec un circuit ou avec deux circuits.

4. Système de freinage (1) selon l'une quelconque des revendications 1 à 3, **caractérisé en ce que** la première soupape d'arrêt (V1) et la deuxième soupape d'arrêt (V2) sont respectivement réalisées sous forme d'électrovannes fermées hors tension, et la troisième soupape d'arrêt (V3) et la quatrième soupape d'arrêt (V4) sans réalisées sous forme d'électrovannes ouvertes hors tension, la première unité d'évaluation et de commande (14) pilotant les soupapes d'arrêt (V1, V2, V3, V4).

5. Système de freinage (1) selon l'une quelconque des revendications 1 à 3, **caractérisé en ce que** la première soupape d'arrêt (V1) et la deuxième soupape d'arrêt (V2) sont respectivement réalisées sous forme d'électrovannes ouvertes hors tension, et la troisième soupape d'arrêt (V3) et la quatrième soupape d'arrêt (V4) sont réalisées sous forme d'électrovannes fermées hors tension, la deuxième unité d'évaluation et de commande (24) pilotant les soupapes d'arrêt (V1, V2, V3, V4).

6. Système de freinage (1) selon l'une quelconque des revendications 1 à 5, **caractérisé en ce que** le système principal (10) et le système secondaire (20) présentent un réservoir de fluide commun (7), ou un premier réservoir de fluide (17) pourvu d'au moins une chambre de fluide (17.1, 17.2) est associé au système principal (10), et un deuxième réservoir de fluide (27) pourvu d'au moins une chambre de fluide (27.1, 27.2) est associé au système secondaire (20).

7. Système de freinage (1) selon l'une quelconque des revendications 1 à 6, **caractérisé en ce que** le premier générateur de pression (12) est réalisé sous forme de système à piston plongeur (12A) ou de système à pompe.

8. Système de freinage (1) selon la revendication 7, **caractérisé en ce que** pour le premier générateur de pression (12), au moins une conduite d'aspiration à clapet antiretour est prévue qui relie hydrauliquement le premier générateur de pression (12) en plus au premier réservoir de fluide (17).

9. Système de freinage (1) selon l'une quelconque des revendications 1 à 8, **caractérisé en ce que** le deuxième générateur de pression (22) est réalisé sous forme de système à piston plongeur (22A) ou de système à pompe.

10. Système de freinage (1) selon l'une quelconque des revendications 7 à 9, **caractérisé en ce que** le système à piston plongeur (12A, 22A) présente une unité piston/cylindre pourvue d'au moins un piston et d'au moins une chambre (12.1, 12.2, 22.1, 22.2) et d'un entraînement (12.3, 22.3), dans lequel l'entraînement (12.3, 22.3) déplace ledit au moins un piston contre la force d'un ressort de rappel pour régler la pression dans ladite au moins une chambre (12.1, 12.2, 22.1, 22.2) .

11. Système de freinage (1) selon l'une quelconque des revendications 7 à 10, **caractérisé en ce que** le système à pompe présente au moins une pompe et au moins un entraînement qui entraîne ladite au moins une pompe.

12. Système de freinage (1) selon l'une quelconque des revendications 6 à 11, **caractérisé en ce que** pendant une modulation individuelle de la pression de freinage dans ledit au moins un frein de roue (RB1, RB2, RB3, RB4) un fluide de freinage évacué du au moins un frein de roue (RB1, RB2, RB3, RB4) est recyclé par ledit au moins un chemin de relâchement de pression (9.1, 9.2) soit dans le premier réservoir de fluide (17), soit dans le deuxième réservoir de fluide (27).

13. Système de freinage (1) selon l'une quelconque des revendications 1 à 12, **caractérisé en ce que** le premier générateur de pression (12), le deuxième générateur de pression (22) et l'unité de modulation (16) sont disposés dans un bloc hydraulique commun.

14. Système de freinage (1) selon l'une quelconque des revendications 1 à 12, **caractérisé en ce que** le premier générateur de pression (12) et l'unité de modulation (16) sont disposés dans un premier bloc hydraulique, et le deuxième générateur de pression (22) est disposé dans un deuxième bloc hydraulique.

15. Procédé de fonctionnement pour un système de freinage (1) hydrauliquement ouvert, à plusieurs circuits, sans intervention mécanique et/ou hydraulique par le conducteur, en particulier pour un véhicule hautement automatisé ou autonome, qui est réalisé selon au moins l'une des revendications 1 à 14, dans lequel, en fonctionnement normal, le système principal (10) augmente ou réduit ou maintient la pression dans les circuits de freinage (BK1, BK2) au moyen du premier générateur de pression (12) des deux générateurs de pression (12, 22), et réalise au moyen de l'unité de modulation (16) la modulation individuelle de la pression de freinage dans les au moins deux freins de roue (RB1, RB2, RB3, RB4), dans lequel, en cas de défaillance du système principal (10), le système secondaire (20) augmente ou réduit ou maintient la pression dans les circuits de freinage (BK1, BK2) au moyen du deuxième générateur de pression (22) des deux générateurs de pression (12, 22), et la modulation individuelle de la pression de freinage est omise dans les au moins deux freins de roue (RB1, RB2, RB3, RB4).

16. Procédé de fonctionnement selon la revendication 16, **caractérisé en ce qu'**en fonctionnement normal, la première soupape d'arrêt (V1) et la deuxième soupape d'arrêt (V2) passent à l'état ouvert, et la troisième soupape d'arrêt (V3) et la quatrième soupape d'arrêt (V4) passent à l'état fermé, dans lequel pour l'augmentation de la pression ou pour la réduction de la pression ou pour le maintien de la pression dans les circuits de freinage (BK1, BK2), l'entraînement (12.3) du premier générateur de pression (12) est piloté de façon adéquate.

17. Procédé de fonctionnement selon la revendication 16 ou 17, **caractérisé en ce qu'**en fonctionnement normal, pour l'augmentation individuelle de la pression dans un frein de roue (RB1, RB2, RB3, RB4) associé, la soupape d'entrée (IV1, IV2, IV3, IV4) associée s'ouvre et la soupape de sortie (OV1, OV2, OV3, OV4) associée se ferme, dans lequel pour le maintien individuel de la pression dans un frein de roue (RB1, RB2, RB3, RB4) associé, la soupape d'entrée (IV1, IV2, IV3, IV4) associée et la soupape de sortie (OV1, OV2, OV3, OV4) associée se ferment, et dans lequel, pour la réduction individuelle de la pression dans un frein de roue (RB1, RB2, RB3, RB4) associé, la soupape d'entrée (IV1, IV2, IV3, IV4) associée se ferme et la soupape de sortie (OV1, OV2, OV3, OV4) associée s'ouvre.

18. Procédé de fonctionnement selon l'une quelconque des revendications 16 à 18, **caractérisé en ce qu'**en cas de défaillance du système principal (10), la première soupape d'arrêt (V1) et la deuxième soupape d'arrêt (V2) passent à l'état fermé et la troisième soupape d'arrêt (V3) et la quatrième soupape d'arrêt (V4) passent à l'état ouvert, dans lequel pour l'augmentation de la pression ou pour la réduction de la pression ou pour le maintien de la pression dans les circuits de freinage (BK1, BK2), l'entraînement (22.3) du deuxième générateur de pression (22) est piloté de façon adéquate.
